(19) Europäisches Patentamt
European Patent Office
Office européen des brevets

(11) **EP 3 367 587 A1**

(12) **EUROPEAN PATENT APPLICATION**
published in accordance with Art. 153(4) EPC

(43) Date of publication:
**29.08.2018 Bulletin 2018/35**

(51) Int Cl.:
***H04B 7/06*** (2006.01)

(21) Application number: **16866705.3**

(22) Date of filing: **18.11.2016**

(86) International application number:
**PCT/KR2016/013374**

(87) International publication number:
**WO 2017/086753 (26.05.2017 Gazette 2017/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **18.11.2015 US 201562256895 P**
**18.11.2015 US 201562256738 P**
**19.11.2015 US 201562257409 P**

(71) Applicant: **Samsung Electronics Co., Ltd.**
**Suwon-si, Gyeonggi-do 16677 (KR)**

(72) Inventors:
• **KWAK, Young-Woo**
  Suwon-si
  **Gyeonggi-do 16577 (KR)**
• **NOH, Hoon-Dong**
  Suwon-si
  **Gyeonggi-do 16577 (KR)**

(74) Representative: **Gulde & Partner**
**Patent- und Rechtsanwaltskanzlei mbB**
**Wallstraße 58/59**
**10179 Berlin (DE)**

(54) **METHOD AND DEVICE FOR TRANSMITTING AND RECEIVING CHANNEL STATE INFORMATION IN WIRELESS COMMUNICATION SYSTEM USING MULTIPLE ANTENNAS**

(57) The present invention relates to a method and a device for efficiently transmitting and receiving a periodic channel state report in a wireless communication system supporting multiple antennas, and according to an embodiment of the present invention, a method by which a terminal transmits channel state information comprises the steps of: receiving, from a base station, first configuration information on at least one reference signal; receiving second configuration information for generating periodic channel state information according to the measurement of the at least one reference signal; receiving, from the base station, and measuring the at least one reference signal on the basis of the first configuration information; and generating the periodic channel state information including a first precoding matrix indicator (PMI) for a wideband so as to transmit the generated periodic channel state information to the base station, on the basis of the second configuration information including configuration information for a channel state report in a subband.

FIG.10

**Description**

[Technical Field]

The present invention relates to methods and devices for transmitting and receiving channel state information in wireless communication systems, and particularly, to methods and devices for transmitting and receiving channel state information in wireless communication systems using multiple antennas.

[Background Art]

In order to meet the demand for wireless data traffic soaring since the 4G communication system came to the market, there are ongoing efforts to develop enhanced 5G communication systems or pre-5G communication systems. For the reasons, the 5G communication system or pre-5G communication system is called the beyond 4G network communication system or post LTE system.

For higher data transmit rates, 5G communication systems are considered to be implemented on ultra high frequency bands (mmWave), such as, e.g., 60GHz. To mitigate pathloss on the ultra high frequency band and increase the reach of radio waves, the following techniques are taken into account for the 5G communication system: beamforming, massive multi-input multi-output (MIMO), full dimensional MIMO (FD-MIMO), array antenna, analog beamforming, and large-scale antenna.

Also being developed are various technologies for the 5G communication system to have an enhanced network, such as evolved or advanced small cell, cloud radio access network (cloud RAN), ultra-dense network, device-to-device (D2D) communication, wireless backhaul, moving network, cooperative communication, coordinated multi-point (CoMP), and interference cancellation.

There are also other various schemes under development for the 5G system including, e.g., hybrid FSK and QAM modulation (FQAM) and sliding window superposition coding (SWSC), which are advanced coding modulation (ACM) schemes, and filter bank multi-carrier (FBMC), non-orthogonal multiple access (NOMA) and sparse code multiple access (SCMA), which are advanced access schemes.

As such, wireless communication systems are evolving to high-speed, high-quality wireless packet data communication systems to provide data services and multimedia services beyond the initial versions that have provided voice-centered services. To that end, various standardization organizations, such as the 3GPP or the IEEE, proceed to standardize evolved wireless communication systems adopting multicarrier-based multiple access schemes. As an example, a diversity of wireless communication standards including 3GPP long term evolution (LTE) and IEEE 802.16m, have been developed to support high-rate, high-quality wireless packet data transmission services based on multiple access schemes. LTE, 802.16m, or other existing evolved wireless communication systems are based on multi-carrier multiple access schemes and may employ various techniques, such as the multi-antenna technology, multiple input multiple output (MIMO), beamforming, adaptive modulation and coding (AMC), and channel sensitive scheduling.

The above-enumerated techniques enhance system capability by, e.g., concentrating transmit power coming from several antennas depending on, e.g., channel quality, adjusting the amount of data transmitted, or selectively transmitting data to the user with a relatively good channel quality to produce a better transmission efficiency. Such schemes mostly operate based on the channel state information between the base station (eNB or BS) and the terminal (user equipment (UE) or MS). Accordingly, it is needed to measure the channel state between the base station and the UE. LTE systems use channel status indication reference signals (CSI-RSs) as reference signals for measuring the channel state. Base station means a device that is located in a predetermined place to carry out downlink transmission and uplink reception. One base station may perform transmission and reception for a plurality of cells. In a wireless communication system, a plurality of base stations may be geographically dispersed and each base station may perform transmission and reception for a plurality of cells.

The reference signal is a signal used to assist in the demodulation and decoding of data symbols received by measuring the state of channel between the base station and the UE(s), such as channel strength or distortion, interference strength, or Gaussian noise, in the wireless mobile communication system. Another use of such a reference signal is to measure the wireless channel state. The receiver may determine the state of radio channel between itself and the transmitter by measuring the strength of reference signal transmitted from the transmitter at an agreed-on transmit power and received via the radio channel. The so-determined state of radio channel is used to determine the data rate for which the receiver is to send a request to the transmitter.

The evolved wireless mobile communication system standards such as 3GPP LTE (-A) or IEEE 802.16m primarily adopt multiple-access schemes using multiple subcarriers such as orthogonal frequency division multiplexing (multiple access)(A) (OFDM(A)). Wireless communication systems adopting multiple access schemes using multiple carriers make differences in channel estimation and measurement capabilities depending on how many symbols and subcarriers the reference signal they are to place in on the time and frequency. Further, the channel estimation and measurement capabilities are influenced by how much power is to be assigned to the reference signal as well. Accordingly, if more time, frequency, and power or other radio resources are allocated to the reference signal, the channel estimation and measurement capability may be enhanced, resultantly leading to demodulation and decoding performance for reception data symbols, as well as increased accuracy of channel state measurement.

However, wireless communication systems are typically assigned limited time, frequency, transmit power, or other radio resources for transmitting signals, and thus, assigning relatively many radio resources to the reference signals may relatively reduce the radio resources that may be allocated to data signals. For that reason, radio resources allocated to the reference signals should be properly determined considering the system throughput. In particular, a technical factor that matters in adopting MIMO which performs transmission and reception using multiple antennas is to assign and measure a reference signal.

In the MIMO schemes, e.g., the full dimension (FD)-MIMO scheme, the precoding matrix indicator (PMI) overhead that the UE should report increases as the codebook size goes up. In particular, periodic channel state reporting is subject to a limitation in the size of the physical uplink control channel (PUCCH) payload, requiring a method for reducing the PMI overhead to fit the PUCCH payload. As an example, existing periodic channel state reporting has adopted codebook subsampling that removes duplicate beam groups or reduces the co-phasing count for compensating for the phase differences between the antennas with different polarizations and beams that are selectable in order to shrink the codebook. However, the periodic channel state reporting that is supported by FD-MIMO bears a large PMI overhead over the existing, and adopting the existing method as it is may cause a significant performance loss.

[Detailed Description of the Invention]

[Technical Problem]

Thus, according to the present invention, there are provided a method and device for efficiently transmitting and receiving periodic channel state reports in a wireless communication system supporting multiple antennas.

According to the present invention, there are also provided a method and device capable of reducing the overhead of channel state reporting in a wireless communication system supporting multiple antennas.

According to the present invention, there are also provided a periodic channel state reporting method and device capable of minimizing the performance loss considering the increased circuit board and PMI overhead in a wireless communication system supporting the FD-MIMO.

According to the present invention, there are also provided a periodic channel state reporting method and device using a codebook defined to be adopted for various antenna arrays in a wireless communication system supporting the FD-MIMO.

[Technical Solution]

According to an embodiment of the present invention, a method for transmitting channel state information by a user equipment (UE) in a wireless communication system using multiple antennas comprises receiving first configuration information about at least one reference signal from a base station, receiving second configuration information for generating periodic channel state information as per measuring the at least one reference signal, receiving and measuring the at least one reference signal from the base station, based on the first configuration information, and generating the periodic channel state information including a first precoding matrix indicator (PMI) for a wideband based on the second configuration information including configuration information for channel state reporting on a subband and transmitting the periodic channel state information to the base station.

According to an embodiment of the present invention, a UE in a wireless communication system using multiple antennas comprises a transceiver configured to transmit and receive data and a controller configured to perform controller to receive first configuration information about at least one reference signal from a base station, receive second configuration information for generating periodic channel state information as per a result of measuring the at least one reference signal, receive and measure the at least one reference signal from the base station, based on the first configuration information, and generate the periodic channel state information including a first precoding matrix indicator (PMI) for a wideband based on the second configuration information including configuration information for channel state reporting on a subband and transmitting the periodic channel state information to the base station.

According to an embodiment of the present invention, a method for receiving feedback information by a base station in a wireless communication system using multiple antennas comprises transmitting first configuration information about at least one reference signal, transmitting second configuration information for receiving from a UE, as the feedback information, periodic channel state information as per a result of measuring the at least one reference signal, and receiving the channel state information including a first PMI for a wideband from the UE based on the first configuration information and the second configuration information, wherein the first PMI for the wideband is received from the UE based on the second configuration information including configuration information for channel state reporting on a subband.

According to an embodiment of the present invention, a base station in a wireless communication system using multiple antennas comprises a transceiver configured to transmit and receive data and a controller configured to perform control to transmit first configuration information about at least one reference signal, transmit second configuration information for receiving from a UE, as feedback information, periodic channel state information as per a result of measuring the at least one reference signal, and receive the channel state information including a first PMI for a wideband from the UE based on the first configuration information and the second configuration information, wherein the first PMI for the wideband is received from the UE based on the second configuration information including configuration information for channel state reporting on a subband.

[Brief Description of Drawings]

Fig. 1 is a view illustrating an example of an FD-MIMO system using multiple transmit antennas;
Fig. 2 is a view illustrating an example of a radio resource that may be scheduled on a downlink in an LTE/LTE-A system;
Fig. 3 is a view illustrating the feedback timings of an RI and a wCQI in an LTE/LTE-A system;
Fig. 4 is a view illustrating the feedback timings of an RI, an sCQI, and a wCQI;
Figs. 5 and 6 are views illustrating feedback timings where PTI=0 and PTI=1 in an LTE/LTE-A system;
Fig. 7 is a view illustrating a CSI-RS transmission method in a wireless communication system using multiple antennas according to an embodiment of the present invention;
Fig. 8 is a view illustrating a method for channel state information reporting in a wireless communication system using multiple antennas according to a first embodiment of the present invention;
Fig. 9 is a view illustrating a method for channel state information reporting in a wireless communication system using multiple antennas according to a second embodiment of the present invention;
Fig. 10 is a flowchart illustrating operations of a UE according to an embodiment of the present invention;
Fig. 11 is a flowchart illustrating operations of a base station according to an embodiment of the present invention;
Fig. 12 is a block diagram illustrating a configuration of a UE according to an embodiment of the present invention; and
Fig. 13 is a block diagram illustrating a configuration of a base station according to an embodiment of the present invention.

[Mode for Carrying out the Invention]

Hereinafter, embodiments of the present invention are described in detail with reference to the accompanying drawings. The same reference denotations may be used to refer to the same or similar elements throughout the specification and the drawings. When making the gist of the present invention unclear, the detailed description of known functions or configurations is skipped.

Other aspects, advantages, and core features of the present invention will be apparent to one of ordinary skill in the art from the following detailed description of exemplary embodiments of the present invention, taken into conjunction with the drawings.

Prior to going into the detailed description of the invention, it might be effective to define particular words and phrases as used herein. As used herein, the terms "include" and "comprise" and their derivatives may mean doing so without any limitations. As used herein, the term "or" may mean "and/or." As used herein, the phrase "associated with" and "associated therewith" and their derivatives may mean "include," "be included within," "interconnect with," "contain," "be contained within," "connect to or with," "couple to or with," "be communicable with," "cooperate with," "interleave," "juxtapose," "be proximate to, "be bound to or with, "have, or "have a property of." As used herein, the term "controller" may mean any device, system, or part thereof controlling at least one operation. As used herein, the term "device" may be implemented in hardware, firmware, software, or some combinations of at least two thereof. It should be noted that functions, whatever particular controller is associated therewith, may be concentrated or distributed or implemented locally or remotely. It should be appreciated by one of ordinary skill in the art that the definitions of particular terms or phrases as used herein may be adopted for existing or future in many cases or even though not in most cases.

For a better understanding of the present invention, various feedback transmission schemes for channel status information (CSI) in FD-MIMO systems and LTE/LTE-A systems to which the present invention may be applicable are described prior to specific embodiments of the present invention.

The present invention may be applied not only to FD-MIMO systems but also, in the same or similar manner, to various wireless communication systems that transmit data using a few tens of, or more, antennas.

The LTE/LTE-A or other wireless communication systems utilize the MIMO technique in which transmission is performed using a plurality of transmit/receive antennas in order to increase system capability and data transmission rate. The MIMO technique makes use of a plurality of transmission/reception antennas to spatially separate and transmit a plurality of information streams. As such, spatially separating and transmitting a plurality of information streams is called spatial multiplexing. Generally, the number of information streams to which spatial multiplexing may be applied varies depending on the number of antennas of the transmitter and receiver. In general, the number of information streams to which spatial multiplexing may apply is referred to as the rank of the corresponding transmission. The MIMO technique supported by the LTE/LTE-A release 11 and its predecessors supports spatial multiplexing for the case where there are eight transmission antennas and eight reception antennas and supports up to rank-8. The FD-MIMO system to which the technology proposed according to embodiments of the present invention applies may be evolved over the existing LTE/LTE-A MIMO technology, supporting more than eight, e.g., 32 or more transmit antennas.

The FD-MIMO system refers to a wireless communication system that transmits data using a few tens or more transmit antennas.

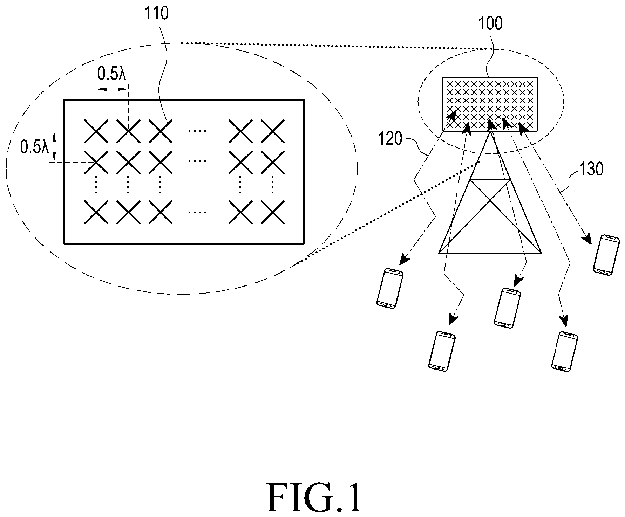

Fig. 1 is a view illustrating an example of an FD-MIMO system using multiple transmit antennas.

Referring to Fig. 1, the base station 100 transmits wireless signals through a few tends or more transmit antennas. The plurality of transmit antennas are arranged a minimum distance apart from each other as indicated by reference number 110. As an example, the minimum distance is a half of the wavelength of the wireless signal transmitted. Generally, where the transmit antennas remain spaced at a distance which is a half $(0.5\lambda)$ of the wavelength of the wireless signal, the respective signals transmitted from the transmit antennas are influenced by radio channels that are mutually less correlated. Where the band of the wireless signal transmitted is 2GHz, the minimum distance becomes 7.5cm, and if the band becomes larger than 2GHz, this minimum distance further shortens.

In Fig. 1, a few tends or more transmit antennas arranged in the base station 100 are used to transmit signals, e.g., reference numbers 120 and 130, to one or more UEs. Proper precoding may be applied to the plurality of transmit antennas of the base station 100, allowing them to simultaneously transmit signals to the plurality of UEs. At this time, one UE may receive one or more information streams. Generally, the number of information streams receivable by one UE is determined depending on the channel context and the number of receive antennas owned by the UE.

In order to effectively implement the FD-MIMO system, the UE needs to exactly measure the channel context and/or interference magnitude and transmit effective channel state information to the base station using the same. The base station receiving the channel state information determines UEs on which it performs transmission, at what data transmission rate to perform transmission, or the precoding to apply using the channel state information in connection with downlink transmission. Since the FD-MIMO system has more transmit antennas than the existing LTE/LTE-A system, applying the channel state information of the existing LTE/LTE-A system (the LTE/LTE-A system may simply be referred to as LTE system unless stated otherwise) to the FD-MIMO system may cause the uplink overhead issue that massive control information should be td on the uplink.

The wireless communication system has limited time, frequency, and power resources. Thus, if more resources are allocated to the reference signal, the resources allocable for traffic channel (data traffic channel) transmission may be reduced, thus resulting in a decrease on the absolute amount of data transmitted. In such case, the channel measurement and estimation capability may be enhanced, but since the absolute amount of data transmitted is reduced, the overall system capability may be rather lowered. Accordingly, a proper distribution is required between resources for the reference signal and resources for signals for traffic channel transmission in order to bring up with the optimal performance from a point of view of the overall system capability.

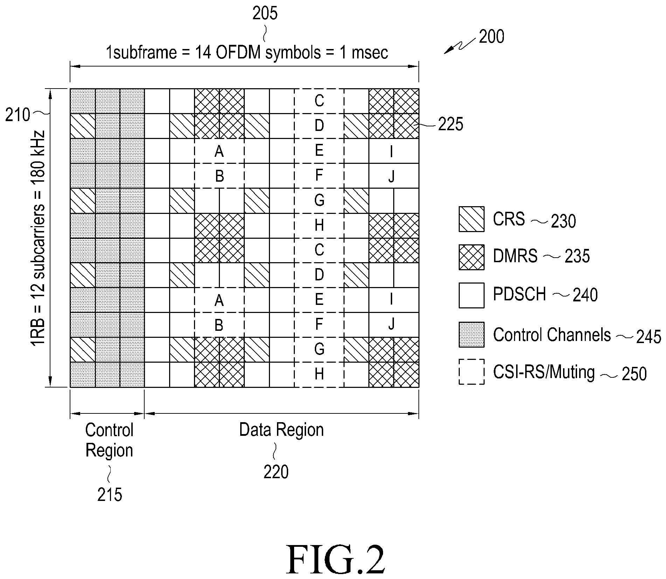

Fig. 2 illustrates an example of a radio resource schedulable on the downlink in an LTE/LTE-A system, wherein the minimum unit of the radio resource, i.e., one subframe and one resource block (RB), is shown.

The radio resource shown in Fig. 2 is constituted of one subframe 200 including a control region 215 and a data region 220 on the time axis and one RB on the frequency axis. Such a radio resource includes, e.g., 12 subcarriers 210 in the frequency domain and 14 OFDM symbols 205 in the time domain, totaling 168 unique frequencies and time positions. In the LTE/LTE-A system, each frequency and time position corresponding to one subcarrier and one symbol section is referred to as a resource element (RE) 225.

The LTE system may transmit a plurality of different types of signals in the radio resource shown in Fig. 2 as follows.

Cell specific RS (CRS) 230: a reference signal that is periodically transmitted for all the UEs belonging to one cell and that may be shared by a plurality of UEs.

Demodulation reference signal (DMRS) 235: a reference signal transmitted for a particular UE. This signal is transmitted only when data is transmitted to the corresponding UE. A DMRS may consist of a total of eight DMRS ports. In LTE/LTE-A, port 7 to port 14 correspond to DMRS ports, and the ports maintains orthogonality not to interfere with each other using code division multiplexing (CDM) or frequency division multiplexing (FDM).

Physical downlink shared channel (PDSCH) 240: a data channel transmitted on the downlink, used for a base station to transmit traffic to a UE, and transmitted via an RE where no reference signal is transmitted in the data region of Fig. 2.

Channel status information reference signal (CSI-RS) 250: a reference signal transmitted for UEs belonging to one cell and used to measure the channel state. A plurality of CSI-RSs may be transmitted in one cell.

Other control channels (PHICH, PCFICH, and PDCCH) 245: provide control information necessary for the UE to receive the PDSCH or transmit the ACK/NACK to operate the hybrid automatic repeat and request (HARQ) for uplink data transmission.

Besides the signals, the LTE-A system may set a muting so that CSI-RS transmitted from another base station may be received without interfering with the UEs in the cell. The muting may apply in the position where the CSI-RS may be transmitted. Generally, the UE may skip the corresponding radio resource, where the CSI-RS is transmitted, and may receive a traffic signal. The muting in the LTE-A system is also called zero-power CSI-RS. This is why the muting applies likewise to the resource positions of the CSI-RS and no transmit power is transmitted.

Referring to Fig. 2, the CSI-RS may be transmitted using some of the positions denoted with A, B, C, D, E, E, F, G, H, I, and J depending on the number of antennas transmitting the CSI-RS. Further, the muting may also apply to some of the positions denoted with A, B, C, D, E, E, F, G, H, I, and J. In particular, the CSI-RS may be transmitted via two, four, or eight REs depending on the number of antenna ports. In case the number of antenna ports is two, the CSI-RS is transmitted through a half of a particular pattern of Fig. 2, in case the number of antenna ports is four, the CSI-RS is transmitted through the overall particular pattern, and in case the number of antenna ports is eight, the CSI-RS is transmitted via two patterns. By contrast, the muting is carried out always through each pattern. That is, the muting, although applicable to a plurality of patterns, cannot apply to only part of one pattern in the case where it does not overlap the position of the CSI-RS. However, only if the muting overlaps at position the CSI-RS, it may apply only to part of one pattern.

Where the CSI-RS is transmitted over two antenna ports, the CSI-RS transmits the respective signals of the antenna ports in two REs connected together on the time axis, and the respective signals of the antenna ports are distinguished by orthogonal codes. Further, where the CSI-RS is transmitted for four antenna ports, two REs are added to the CSI-RS for two antenna ports, so that signals for the two antenna ports are further transmitted by the same method. The same also applies where the CSI-RS is transmitted for eight antenna ports.

Generally, the wireless communication system needs to transmit a reference signal to measure the state of the downlink channel. In the 3GPP LTE-advanced (LTE-A) system, the UE may measure the channel state between the UE and the base station using the CRS or CSI-RS that the base station transmits. Basically, some factors should be considered for the channel state, e.g., the quantity of interference on the downlink. The interference quantity on the downlink includes interference signals or thermal noise that is caused by the antennas in the neighbor base station and this is critical for the UE to determine the channel context of the downlink. As an example, where the base station using one transmit antenna transmits signals to the UE using one receive antenna, the UE determines per-symbol energy receivable on the downlink using the reference signal received from the base station and the amount of interference to be simultaneously received in the period where the symbol is received and determines the signal-to-noise ratio (e.g., Es/Io). The determined Es/Io is converted into a data transmission speed or its corresponding value and is notified to the base station in the form of a CQI, thereby enabling determination as to the data transmission speed at which the base station should perform data transmission to the UE on downlink.

In the LTE-A system, the UE feedbacks information about the channel state of the downlink to the base station so that it may be utilized for downlink scheduling by the base station. That is, the UE measures the reference signal transmitted from the base station on downlink and feedbacks the information extracted therefrom to the base station in a form as defined in the LTE-LTE-A standards. The information fed back by the UE in the LTE/LTE-A system includes three types of information (RI, PMI, and CQI) as follows:

1) Rank indicator (RI): the number of spatial layers that may be received in the current channel state by the UE
2) Precoder matrix indicator (PMI): an indicator for a precoding matrix favored by the UE in the current channel state.
3) Channel quality indicator (CQI): a maximum data rate at which the UE may perform reception in the current channel state. The CQI may be replaced with the signal-to-noise ratio (SINR), maximum error correction code rate and modulation scheme, or data efficiency per frequency which may be utilized similar to the maximum data rate.

The RI, PMI, and CQI are associated with one another and have meanings. Different precoding matrices as supported in the LTE/LTE-A system are defined per rank as an example. Accordingly, the PMI value Y when the RI is 1 and the PMI value Y when the RI is 2 are interpreted differently, for example. Further, it is assumed that when the UE determines the CQI, the PMI value, Y, that the UE has provided to the base station has also applied. That is, the UE feedbacking the RI_X, PMI_Y, and CQI_Z to the base station is the same as the UE notifying the base station that data may be received at the data transmission rate corresponding to the CQI_Z when the rank is the RI_X and the precoding is the PMI_Y. As such, the UE may assume the transmission scheme that the base station is to perform when calculating the CQI so that the optimized performance can be achieved when the base station actually performs transmission in the transmission scheme.

In the LTE/LTE-A system, the UE's periodic feedback information is set to one of the following four feedback modes (or reporting modes) depending on what information is contained:

    1) Reporting mode 1-0: RI, wideband CQI (hereinafter, wCQI)
    2) Reporting mode 1-1: RI, wCQI, PMI
    3) Reporting mode 2-0: RI, wCQI, subband CQI (hereinafter, sCQI)
    4) Reporting mode 2-1: RI, wCQI, sCQI, PMI

The feedback timing of each piece of information for the four feedback modes is determined by values transferred by a higher layer signal, such as $N_{pd}$, $N_{OFFSET,CQI}$, $M_{RI}$, and $N_{OFFSET,RI}$. Here, $N_{pd}$ and $N_{OFFSET,CQI}$ mean the period and offset value in the subframes for CQI/PMI reporting, and $M_{RI}$ and $N_{OFFSET,RI}$ means the period and relative offset value in the subframes for RI reporting. In feedback mode 1-0, the transmission period of wCQI is $N_{pd}$, and the feedback timing is determined with the subframe offset of $N_{OFFSET,CQI}$. Further, the transmission period of RI is $N_{pd} \times M_{RI}$, and the subframe offset is $N_{OFFSET,CQI}+N_{OFFSET,RI}$.

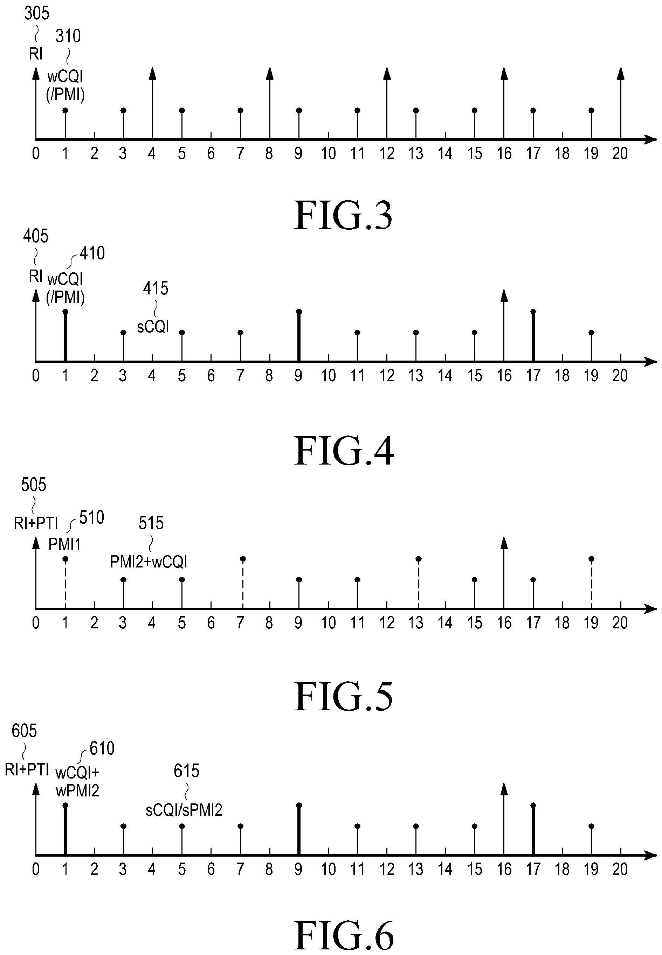

Fig. 3 is a view illustrating the feedback timings of the RI and wCQI in the LTE/LTE-A system, e.g., the feedback timings of the RI 305 and the wCQI 310 where $N_{pd}$=2, $M_{RI}$=2, $N_{OFFSET,CQI}$=1, and $N_{OFFSET,RI}$=-1. In Fig. 3, each timing (0, 1, ... , 20, ...) denotes a subframe index.

Feedback mode 1-1, although having the same feedback timing as feedback mode 1-0, differs in that the PMI together with the wCQI 310 is transmitted at the wCQI transmission timing as shown in Fig. 3.

Meanwhile, in feedback mode 2-0, the feedback transmission period for the sCQI is $N_{pd}$, and the offset value is $N_{OFFSET,CQI}$, and the feedback transmission period for the wCQI is $H \times N_{pd}$, and the offset value is $N_{OFFSET,CQI}$ as is the offset value of the sCQI. Here, H=J*H+1, where K is a value transferred through the higher layer signal, and J is a value determined depending on the system bandwidth. For example, for 10MHz systems, J may be defined as 3. At last, the wCQI is transmitted once for every H sCQI transmissions. The transmission of the RI is $M_{RI} \times H \times N_{pd}$, and the offset is $N_{OFFSET,CQI}+N_{OFFSET,RI}$.

Fig. 4 is a view illustrating the feedback timings of the RI, sCQI, and wCQI, e.g., the feedback timings of the RI 405, wCQI 410, and sCQI 415 where $N_{pd}$=2, $M_{RI}$=2, $J$=3(10MHz), $K$=1, $N_{OFFSET,CQI}$=1, and $N_{OFFSET,RI}$=-1. In Fig. 4, each timing (0, 1, ... , 20, ...) denotes a subframe index.

Feedback mode 2-1, although having the same feedback timing as feedback mode 2-0, differs in that the PMI together with the wCQI 410 is transmitted at the wCQI transmission timing as shown in Fig. 4.

In Figs. 3 and 4, the above-described feedback timing is for the case where the number of CSI-RS antenna ports is four or less, and for the UE receiving allocation of CSI-RS for other partial four or eight antenna ports, two types of PMI information should be fed back unlike the feedback timing.

Specifically, for eight CSI-RS antenna ports, feedback mode 1-1 is divided again into two submodes. In the first submode, the RI together with the first PMI information is transmitted, and the second PMI information is transmitted together with the wCQI. Here, the feedback period and offset for the wCQI and the second PMI are defined as $N_{pd}$ and $N_{OFFSET,CQI}$, and the feedback period and offset for the RI and the first PMI are defined as $M_{RI} \times N_{pd}$ and $N_{OFFSET,CQI}+N_{OFFSET,RI}$. Here, assuming that the precoding matrix corresponding to the first PMI is W1(or $W_1$), and the precoding matrix corresponding to the second PMI is W2(or $W_2$), the UE and the base station share the information that the UE's favored precoding matrices have been determined as W1 and W2.

In the case of feedback mode 2-1 for eight CSI-RS antenna ports, the feedback of precoding type indicator (PTI) information is added. The PTI is fed back along with the RI, the period is $M_{RI} \times H \times N_{pd}$, and the offset is defined as $N_{OFFSET,CQI}+N_{OFFSET,RI}$. Where the PTI is 0, the first PMI, the second PMI, and the wCQI are all fed back, and the wCQI and the second PMI are together transmitted in the same timing, and the period is $N_{pd}$, and the offset is given as $N_{OFFSET,CQI}$. Further, the period of the first PMI is $H' \times N_{pd}$ and the offset is $N_{OFFSET,CQI}$. Here, $H'$ is transferred through a higher layer signal. Further, where PTI is 1, PTI together with RI is transmitted, and wCQI and the second PMI are transmitted together, and sCQI is fed back at an additional separate timing. In this case, the first PMI is not transmitted. The period and offset of the PTI and RI are the same as those where the PTI is 0, and the period and offset of the sCQI are defined as $N_{pd}$ and $N_{OFFSET,CQI}$. Further, the wCQI and the second PMI are fed back in the period of $H \times N_{pd}$ and the offset of $N_{OFFSET,CQI}$, and $H$ is defined like the number of CSI-RS antenna ports is four.

Figs. 5 and 6 are views illustrating feedback timings where PTI=0 and where PTI=1, respectively, in the LTE/LTE-A system, wherein where $N_{pd}$=2, $M_{RI}$=2, $J$=3(10MHz), $K$=1, $H'$=3, $N_{OFFSET,CQI}$=1, $N_{OFFSET,RI}$=-1, and PTI=0 (Fig. 5) and PTI=1 (Fig. 6), Fig. 5 illustrates the feedback timings of the RI and PTI 505, the first PMI(PMI1) 510, and the second PMI (PMI2) and the wCQI 515, and Fig. 6 illustrates the feedback timings of the RI and PTI 605, the wCQI and wPMI2 610, and the sCQI/sPMI2 615. In Fig. 6, the wPMI2 means the second PMI for the wideband, and the sPMI2 means the second PMI for the subband. In Figs. 5 and 6, each timing (0, 1, ... , 20, ...) denotes a subframe index.

The LTE/LTE-A system supports the UE's aperiodic feedback transmission as well as the periodic feedback transmission. When the base station desires to obtain aperiodic feedback information of a particular UE, the base station sets the aperiodic feedback indicator included in the downlink control information (DCI, downlink control information) for uplink data scheduling of the UE to perform particular aperiodic feedback and performs the uplink data scheduling of the UE. The corresponding UE, when receiving the indicator set to perform aperiodic feedback transmission in an nth subframe, includes the aperiodic feedback information upon data transmission in an n+kth subframe and performs uplink transmission. Here, k is a parameter defined in the 3GPP LTE release 11 standards, and this is 4 for frequency division duplexing (FDD) while defined as shown in Table 1 for time division duplexing (TDD). Table 1 below represents an example of k for each subframe number n in the TDD UL/DL configuration.

[Table 1]

| TDD UL/DL Configura tion | subframe number *n* | | | | | | | | | |
|---|---|---|---|---|---|---|---|---|---|---|
| | 0 | 1 | 2 | 3 | 4 | 5 | 6 | 7 | 8 | 9 |
| 0 | - | - | 6 | 7 | 4 | - | - | 6 | 7 | 4 |
| 1 | - | - | 6 | 4 | - | - | - | 6 | 4 | - |
| 2 | - | - | 4 | - | - | - | - | 4 | - | - |
| 3 | - | - | 4 | 4 | 4 | - | - | - | - | - |
| 4 | - | - | 4 | 4 | - | - | - | - | - | - |
| 5 | - | - | 4 | - | - | - | - | - | - | - |
| 6 | - | - | 7 | 7 | 5 | - | - | 7 | 7 | - |

Where the aperiodic feedback transmission is set, the feedback information includes RI, PMI, and CQI like in the case of the periodic feedback transmission, and the RI and the PMI might not be fed back according to feedback settings. The CQI may include both the wCQI and the sCQI or only the wCQI information.

The LTE/LTE-A system provides codebook sampling functionality for periodic channel state reporting. In the LTE/LTE-A system, the periodic feedback transmission of the UE is transmitted to the base station through the PUCCH. Since the amount of information that may be transmitted once through PUCCH is limited, various feedback objects, such as RI, wCQI, sCQI, wPMI2, and sPMI2, may be transmitted through PUCCH by way of subsampling or two or more pieces of feedback information may be encoded together (joint encoding) and may be transmitted through PUCCH. As an example, when eight CSI-RS ports are configured by the base station, RI and PMI1 reported in submode 1 of PUCCH mode 1-1 may be joint-encoded as shown in Table 2. PMI1 constituted of 4 bits and RI constituted of 3 bits based on Table 2 are joint-encoded with a total of five bits. Submode 2 of PUCCH mode 1-1 joint encodes PMI1 consisting of four bits and PMI2 consisting of other four bits as shown in Table 3 into four bits in total. Since submode 2 has a higher subsampling level than submode 1 (e.g., four bits => three bits subsampling in the case of submode 1, and eight bits => four bits subsampling in the case of submode 2), it cannot report more precoding indexes. As such, subsampling means reducing the number of information bits and transmitting the information. As another example, where eight CSI-RS ports are configured by the base station, PMI2 reported in PUCCH mode 2-1 may be subsampled as shown in Table 4 below. Referring to Table 4, PMI2, when its associated RI is 1, is reported with four bits. However, in case the associated RI is two or more, differential CQI for the second codeword should be reported together, and thus it may be seen that PMI2 is subsampled with two bits and reported. The LTE/LTE-A system may apply subsampling or joint encoding to six types of periodic feedback in total including Tables 2, 3, and 4. Table 2 below represents an example of joint encoding on a first codebook index ($i_1$) and the RI for submode 1 of PUCCH mode 1-1.

[Table 2]

| Value of joint encoding of RI and the first PMI $I_{RI/PMI1}$ | RI | Codebook index $i_1$ |
|---|---|---|
| 0-7 | 1 | $2I_{RI/PMI1}$ |
| 8-15 | 2 | $2(I_{RI/PMI1}-8)$ |
| 16-17 | 3 | $2(I_{RI/PMI1}-16)$ |
| 18-19 | 4 | $2(I_{RI/PMI1}-18)$ |
| 20-21 | 5 | $2(I_{RI/PMI1}-20)$ |
| 22-23 | 6 | $2(I_{RI/PMI1}-22)$ |
| 24-25 | 7 | $2(I_{RI/PMI1}-24)$ |
| 26 | 8 | 0 |
| 27-31 | reserved | NA |

Table 3 below represents an example of joint encoding on the first and second codebook indexes ($i_1$, $i_2$) and the RI for submode 2 of PUCCH mode 1-1.

[Table 3]

| RI | Relationship between the first PMI value and codebook index $i_1$ | | Relationship between the second PMI value and codebook index $i_2$ | | total #bits |
|---|---|---|---|---|---|
| | Value of the first PMI $I_{PMI1}$ | Codebook index $i_1$ | Value of the second PMI $I_{PMI2}$ | Codebook index $i_2$ | #bits |
| 1 | 0-7 | $2I_{PMI1}$ | 0-1 | $2I_{PMI2}$ | 4 |
| 2 | 0-7 | $2I_{PMI1}$ | 0-1 | $I_{PMI2}$ | 4 |
| 3 | 0-1 | $2I_{PMI1}$ | 0-7 | $4\lfloor I_{PMI2}/4 \rfloor + I_{PMI2}$ | 4 |
| 4 | 0-1 | $2I_{PMI1}$ | 0-7 | $I_{PMI2}$ | 4 |
| 5 | 0-3 | $I_{PMI1}$ | 0 | 0 | 2 |
| 6 | 0-3 | $I_{PMI1}$ | 0 | 0 | 2 |
| 7 | 0-3 | $I_{PMI1}$ | 0 | 0 | 2 |
| 8 | 0 | 0 | 0 | 0 | 0 |

Table 4 represents an example of codebook subsampling for PUCCH mode 2-1.

[Table 4]

| RI | Relationship between the second PMI value and codebook index $i_2$ | |
|---|---|---|
| | Value of the second PMI $I_{PMI2}$ | Codebook index $i_2$ |
| 1 | 0-15 | $I_{PMI2}$ |
| 2 | 0-3 | $2I_{PMI2}$ |
| 3 | 0-3 | $8 \cdot \lfloor I_{PMI2}/2 \rfloor + (I_{PMI2} \bmod 2) + 2$ |
| 4 | 0-3 | $2I_{PMI2}$ |
| 5 | 0 | 0 |
| 6 | 0 | 0 |
| 7 | 0 | 0 |
| 8 | 0 | 0 |

As described above, in order to effectively implement the FD-MIMO system, the UE needs to exactly measure the channel state and interference magnitude and generate and report effective channel state information to the base station using the same. The base station receiving the channel state information determines UEs on which it performs transmission, at what data transmission rate to perform transmission, or the precoding to apply using the channel state information in connection with downlink transmission. The FD-MIMO system has many transmit antennas and considers a two-dimensional antenna array, and the shape of the antenna array actually applicable thereto may be very diversified. Accordingly, it is not appropriate to apply the method for transmitting and receiving channel state information for the LTE/LTE-A system, which is designed considering only a one-dimensional transmit antenna array having up to eight antennas, to the FD-MIMO system as it is. To optimize the FD-MIMO system, it is necessary to define a new codebook that is applicable to diverse antenna array shapes.

To that end, according to embodiments of the present invention described below, there are proposed schemes for reducing the complexity in channel state reporting corresponding to multiple dimensions, such as the vertical and horizontal dimension or the first and second dimensions, in periodic channel state reporting by allowing the PMI to be transmitted using the existing 2, 4, or 8 CSI-RS port codebook and some of the CSI-RSs configured for the plurality of CSI-RS ports to reduce the overhead and design complexity upon PMI reporting using a two-dimensional (2D) codebook in the FD-MIMO-based transmission and reception that is based in the LTE-A system.

Generally, where multiple transmit antennas are used as is the FD-MIMO system, CSI-RSs should be transmitted in proportion thereto. As an example, where the LTE/LTE-A system uses eight transmit antennas, the base station transmits the CSI-RS corresponding to eight ports to the UE and allows it to measure the channel state of the downlink. At this time, the base station may use a radio resource constituted of eight REs such as As and Bs in Fig. 2 in one RB in transmitting the CSI-RS corresponding to the eight ports. Applying the CSI-RS transmission of the LTE/LTE-A system to the FD-MIMO system requires that the radio resource proportional to the number of transmit antennas be allocated to the CSI-RS. That is, where the base station has 128 transmit antennas, the base station transmits the CSI-RS using a total of 128 REs in one RB. Such CSI-RS transmission scheme may raise the accuracy of channel measurement between antennas but requires excessive radio resources and thus may reduce radio resources necessary to transmit and receive wireless data. Accordingly, given such merits and demerits, the following two methods may be considered upon transmission of the CSI-RS in the base station adopting multiple transmit antennas such as in the FD-MIMO system.

CSI-RS transmission method 1: a method of performing transmission, with as many radio resources as the number of antennas assigned to the CSI-RS

CSI-RS transmission method 2: a method of performing transmission, with the CSI-RS divided into a plurality of dimensions.

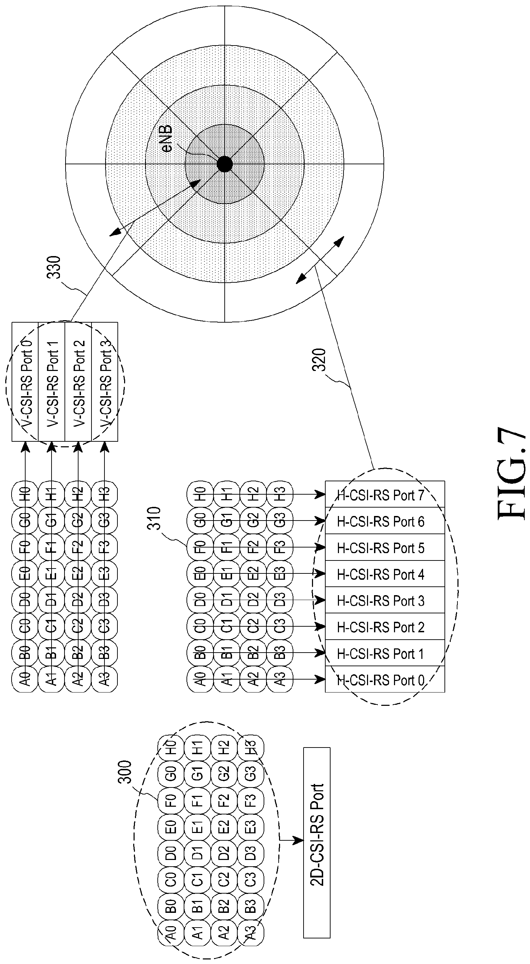

Fig. 7 is a view illustrating a CSI-RS transmission method in a wireless communication system using multiple antennas according to an embodiment of the present invention. CSI-RS transmission methods 1 and 2 are described with reference to Fig. 7.

Referring to Fig. 3, the FD-MIMO operating base station may take advantage of a few tens of (e.g., a total of 32 or more) multiple antennas. Reference number 300 in Fig. 3 denotes a method of assigning as many radio resources as the number of antennas and performing transmission using CSI-RS transmission method 1. In reference number 300, 32 antennas, respectively, are marked with A0,..,A3, B0,..,B3, C0,..,C3, D0,..,D3, E0,..,E3, F0,..,F3, G0,..,G3, H0,...,H3. In reference number 300, the 32 antennas may transmit two-dimensional (2D) CSI-RSs, and the 2D-CSI-RSs which enable measurement of the channel state of all the horizontal and vertical antennas may be transmitted through the 32 antenna ports marked as above. Such method may raise the accuracy of channel information because each antenna is assigned a radio resource but consumes relative more radio resources for control information or data, and is thus not effective in terms of resource efficiency.

Reference number 310 in Fig. 3 is a method enabling the UE to perform channel measurement on many transmit antennas while allocating a relatively small number of radio resources even if it presents a relatively low accuracy of channel state information using CSI-RS transmission method 2. This is an example of the method in which all CSI-RSs are separated into N dimensions and transmitted. For example, where the transmit antennas of the base station are arrayed in 2D as shown in Fig. 1, the CSI-RSs are separated into two dimensions and transmitted. At this time, the first (dimensional) CSI-RSs are operated as horizontal CSI-RSs for measuring the channel state of the horizontal direction, and the second (dimensional) CSI-RSs are operated as vertical cameras for measuring the channel state of the vertical direction. In the example of Fig. 3, the 32 antennas in reference number 310, respectively, are marked with A0,..,A3, B0,..,B3, C0,..,C3, D0,..,D3, E0,..,E3, F0,..,F3, G0,..,G3, H0,...,H3, like in reference number 300. As such, in the example of Fig. 3, the 32 antennas may transmit the first and second CSI-RSs corresponding to the two dimensions in the horizontal and vertical directions. At this time, the H-CSI-RS for measuring the channel state of the horizontal direction may be transmitted through the following eight antenna ports as in reference number 320.

H-CSI-RS port 0: is configured of a combination of antennas A0, A1, A2, and A3
H-CSI-RS port 1: is configured of a combination of antennas B0, B1, B2, and B3
H-CSI-RS port 2: is configured of a combination of antennas C0, C1, C2, and C3

H-CSI-RS port 3: is configured of a combination of antennas D0, D1, D2, and D3
H-CSI-RS port 4: is configured of a combination of antennas E0, E1, E2, and E3
H-CSI-RS port 5: is configured of a combination of antennas F0, F1, F2, and F3
H-CSI-RS port 6: is configured of a combination of antennas G0, G1, G2, and G3
H-CSI-RS port 7: is configured of a combination of antennas H0, H1, H2, and H3

In the above embodiment, combining a plurality of antennas into one CSI-RS port means antenna virtualization which may typically be achieved by a linear combination of the plurality of antennas. The V-CSI-RS for measuring the channel state of the vertical direction may be transmitted through the following four antenna ports as in reference number 330.

V-CSI-RS port 0: is configured of a combination of antennas A0, B0, C0, D0, E0, F0, G0, and H0
V-CSI-RS port 1: is configured of a combination of antennas A1, B1, C1, D1, E1, F1, G1, and H1
V-CSI-RS port 2: is configured of a combination of antennas A2, B2, C2, D2, E2, F2, G2, and H2
V-CSI-RS port 3: is configured of a combination of antennas A3, B3, C3, D3, E3, F3, G3, and H3

As such, where a plurality of antennas are arrayed in 2D, e.g., by MxN (vertical direction x horizonal direction), the channel state in the FD-MIMO system may be measured using the N horizontal CSI-RS ports and the M vertical CSI-RS ports. That is, where two CSI-RSs are used, the channel state may be grasped using M+N CSI-RS ports for MN transmit antennas. As such, grasping the information on more transmit antennas using fewer CSI-RS ports acts as a critical advantage in reducing CSI-RS overhead. In the above embodiment, MN=K CSI-RSs are used to grasp the channel state for the transmit antennas in the FD-MIMO system, and such approach may apply likewise where two CSI-RSs are used. Although the embodiment of the present invention described assumes the use of CSI-RS transmission method 1, the above approach may apply likewise where CSI-RS transmission method 2 is used.

As in the above example, the existing 2, 4, or 8 port CSI-RSs may be bundled up for the CSI-RS port to support multiple antennas. Such CSI-RS port supporting method may be varied depending on whether to use the non-precoded (NP) CSI-RS in which the CSI-RS is transmitted in the same scheme as the existing 2, 4, or 8 port CSI-RS or to use the beamformed (BF) CSI-RS in which the CSI-RS overhead has been reduced by applying beamforming to the antennas. To support the NP CSI-RS and the BF CSI-RS, the CSI-RS resources or CSI-RS port positions for existing 1, 2, 4, or 8 CSI-RS ports may be bundled up using the RRC fields shown in Tables 5 to 11. Although the information shown in Tables 5 to 11 is separately set forth for convenience purposes, the information shown in Tables 5 to 11 may also be appreciated as one connected RRC field. That is, Tables 5 to 11 represent examples of configurations of CSI-process information and CSI-RS information for NP CSI-RS and BF CSI-RS transmission.

[Table 5]

```
-- ASN1START
CSI-Process-r11 :: = SEQUENCE {
    csi-ProcessId-r11 CSI-ProcessId-r11,
    csi-RS-ConfigNZPId-r11 CSI-RS-ConfigNZPId-r11,
    csi-IM-ConfigId-r11 CSI-IM-configId-r11,
    p-C-AndCBSRList-r11 SEQUENCE (SIZE (1..2)) OF P-C-AndCBSR-
r11,
    cqi-ReportBothProc-r11 CQI-ReportBothProc-r11
    OPTIONAL, -- Need OR
    cqi-ReportPeriodicProId-r11 INTEGER (0..maxCQI-ProcExt-
r11) OPTIONAL, -- Need OR
    cqi-ReportAperiodicProc-r11 CQI-ReportAperiodicProc-r11
    OPTIONAL, -- Need OR
    ...,
```

[Table 6]

```
[[ alternativeCodebookEnabledFor4TXProc-r12 ENUMERATED
{true} OPTIONAL, -- Need ON
        csi-IM-ConfigldList-r12 CHOICE {
            release NULL,
            setup SEQUENCE (SIZE
(1..2)) OF cSI-IM-ConfigId-r12
        }
                OPTIONAL, -- Need ON
        cqi-ReportAperiodicProc2-r12 CHOICE {
            release NULL,
            setup CQI-
ReportAperiodicProc-r11
        }
                OPTIONAL -- Need ON
    ]],
    [[ eMIMO-Type-r13 CHOICE {
            release NULL,
            setup CHOICE {
                nonPrecoded-r13
    NonPrecodedCSI-RS-Info-r13,
                beamformed-r13
    BeamformedCSI-RS-Info-r13
        }
                OPTIONAL
    }
                OPTIONAL -- Need ON
    ]]
}
```

[Table 7]

```
P-C-AndCBSR-r11 :: = SEQUENCE {
    p-C-r11 INTEGER (-8..15),
} codebookSubsetRestriction-r11 BIT STRING
P-C-AndCBSR-r13 ::= SEQUENCE {
    p-C-r11 INTEGER (-8..15),
    codebookSubsetRestriction1-r13 BIT STRING,
    codebookSubsetRestriction2-r13 BIT STRING OPTIONAL,
    -- Cond NonPreCoded
    codebookSubsetRestriotion3-r13 BIT STRING OPTIONAL
    -- Cond Beamformed
}
```

[Table 8]

```
P-C-AndCBSR-PerResourceConfig-r13 ::= SEQUENCE (SIZE (1..2)) P-C-
AndCBSR-r13
NonPrecodedCSI-RS-Info-r13 SEQUENCE {
    p-C-AndCBSRList-r13 SEQUENCE
(SIZE (1..2)) P-C-AndCBSR-r13,
    codebookConfigN1-r13 ENUMERATED {an1,
an2, an3, an4, an8},
    codebookConfigN2-r13 ENUMERATED {an1,
an2, an3, an4, an8},
    codebookOverSamplingRateConfig-01-r13 ENUMERATED {N/A,4,8},
    codebookOverSamplingRateConfig-02-r13 ENUMERATED N/A,4,8},
    codebookSubsetSelectionConfig-r13 ENUMERATED {1, 2, 3,
4}
}
```

[Table 9]

```
BeamformedCSI-RS-Info-r13 SEQUENCE {
    csi-RS-ConfigNZPIdLiStExt-r13 SEQUENCE (SIZE (1..7))
OF CSI-RS-ConfigNZPId-11,
    csi-IM-ConfigIdListExt-r13 SEQUENCE (SIZE
(1..7)) OF CSI-IM-ConfigId-r11,
    p-C-AndCBSR-PerResourceConfigList-r13 SEQUENCE (SIZE (1..4))
OF P-C-AndCBSR-PerResourceConfig-r13 OPTIONAL -- Need OR,
}
-- ASN1STOP
```

[Table 10]

```
-- ASN1START
CSI-RS-ConfigNZP-r11 ::= SEQUENCE {
    csi-RS-ConfigNZPId-r11 CSI-RS-ConfigNZPId-r11,
    antennaPortsCount-r11 ENUMERATED {an1, an2, an4,
an8},
    resourceConfig-r11 INTEGER (0..31),
    subframeConfig-r11 INTEGER (0..154),
    scramblingIdentity-r11 INTEGER (0..503),
    qcl-CRS-Info-r11 SEQUENCE {
        qcl-ScramblingIdentity-r11 INTEGER (0..503),
            crs-PortsCount=r11 ENUMERATED {n1,
n2, n4, spare1},
        mbsfn-SubframeConfigList-r11 CHOICE {
                release NULL,
                setup SEQUENCE {
                    subframeConfigList
        MBSFN-SubframeConfigList
            } }
    } OPTIONAL -- Need ON
    }
                            OPTIONAL, -- Need OR
    [[eMIMO-r13 CHOICE
            release NULL,
            setup SEQUENCE {
                nzp-resourceconfigList-r13 SEQUENCE
(SIZE (2..8)) OF ResourceConfig-r13,
                cdmType
        ENUMERATED {cdm2, cdm4} OPTIONAL -- Need OR
}} OPTIONAL, -- Need ON
]]
}
```

[Table 11]

```
ResourceConfig-r13 ::= INTEGER (0..31)
MeasRestrict-Config::= SEQUENCE {
    eMIMO-InfoBeamformed CHOICE {
            release NULL,
            setup SEQUENCE {
                channelMeasRestriction ENUMERATED
{on} //only for Class B//
                interferenceMeasRestriction ENUMERATED
{on} //mandatory both for Class A and Class B//
    }
-- ASNlSTOP
```

The NP CSI-RS may support 12, 16, or more CSI-RS ports using the positions for the existing CSI-RS in one subframe and using the information (e.g., RRC field) of Tables 5 to 11. To that end, the field information is set forth as nzp-resourceConfigList-r13 in Tables 5 to 11, and the field information may be used to set the position for the CSI-RS. Further, in the BF CSI-RS, csi-RS-ConfigNZPIdListExt-r13 and csi-IM-ConfigIdListExt-r13 may be used to bundle up individual CSI-RS resources which may differ in the number of CSI-RS ports, subframe, and codebook subset restriction to be used as the BF CSI-RS. To support 2D antennas in the NP CSI-RS, a new 2D codebook is required which may be varied depending on per-dimension antennas and oversampling factors and codebook settings.

The terms as used herein are defined as follows.

RI: a rank indicator that has been reported from the UE to the base station for the rank of channel obtained by simultaneously applying horizontal and vertical precodings to the 2D-CSI-RS or that has been determined by a predetermined rule

$i_1$: a first PMI (i.e., corresponding to $W_1$) that the UE has notified the base station by obtaining the optimal precoding based on the channel obtained by applying 2D precoding to the 2D-CSI-RS. The first PMI may indicate a beam group selected in the horizontal and vertical directions.

$i_{11}$: a beam group selected in the first dimension for the 2D-CSI-RS. This may be some bits of the first PMI bit payload ($W_1$ bit payload).

$i_{12}$: a beam group selected in the second dimension for the 2D-CSI-RS. This may be some bits of the first PMI bit payload ($W_1$ bit payload).

$i_2$: a second PMI (i.e., corresponding to $W_2$) that the UE has notified the base station by obtaining the optimal precoding based on the channel obtained by applying 2D precoding to the 2D-CSI-RS. The second PMI may indicate co-phrasing necessary to correct the phase difference between antennas with different polarizations and the beam selected from the beam group selected in the horizontal and vertical directions.

CQI: corresponds to the data transmission rate that the UE may support as generated under the assumption that 2D precoding has simultaneously applied.

The structure of the 2D codebook may be represented as in Equation 1 below.

$$[\text{Equation 1}]$$

$$W = (W_{11} \otimes W_{12})W_2 = W_1 W_2$$

Here, $W_{11}$ and $W_{12}$ indicate the PMIs related to some bits of the first PMI bit payload (W1 bit payload) and are respectively selected by $i_{11}$ and $i_{12}$. In this case, Equation 1 may be directly represented in the codebook and thus be shown or may indirectly be represented. W2 is also selected by $i_2$ that indicates the second PMI as does $i_{11}/i_{12}$. Tables 12 and 13 below exemplify the rank1 2D codebook using such a 2D codebook structure, representing an example of the 2D codebook for 1-layer CSI reporting.

[Table 12]

- **The PMI feedback payload is adjusted based on *Config***
  - *Config* = 1 (compact $i_2$, no beam selection for 1 and 2 layers):
    - # of bits for $i_{11}$ and $i_{12}$ = ceil(log$_2$(N$_1$O$_1$)) + ceil(log$_2$(N$_2$O$_2$))
    - # of bits for $i_2$ (per rank 1,2) = (2,2)
  - *Config* = 2, 3, 4 (following legacy):
    - # of bits for $i_{11}$ and $i_{12}$ = ceil(log$_2$(N$_1$O$_1$/2))+ ceil(log$_2$(N$_2$O$_2$/2))
    - # of bits for $i_2$ (per rank 1,2) = (4,4)
  - TBD rank 3-8

[Table 13]

| $i'_2$ | 0 | 1 | 2 | 3 |
|---|---|---|---|---|
| Precoder | $W^{(1)}_{s_1 i_{1,1}, s_2 i_{1,2}, 0}$ | $W^{(1)}_{s_1 i_{1,1}, s_2 i_{1,2}, 1}$ | $W^{(1)}_{s_1 i_{1,1}, s_2 i_{1,2}, 2}$ | $W^{(1)}_{s_1 i_{1,1}, s_2 i_{1,2}, 3}$ |
| $i'_2$ | 4 | 5 | 6 | 7 |
| Precoder | $W^{(1)}_{s_1 i_{1,1}+1, s_2 i_{1,2}, 0}$ | $W^{(1)}_{s_1 i_{1,1}+1, s_2 i_{1,2}, 1}$ | $W^{(1)}_{s_1 i_{1,1}+1, s_2 i_{1,2}, 2}$ | $W^{(1)}_{s_1 i_{1,1}+1, s_2 i_{1,2}, 3}$ |
| $i'_2$ | 8 | 9 | 10 | 11 |
| Precoder | $W^{(1)}_{s_1 i_{1,1}+2, s_2 i_{1,2}, 0}$ | $W^{(1)}_{s_1 i_{1,1}+2, s_2 i_{1,2}, 1}$ | $W^{(1)}_{s_1 i_{1,1}+2, s_2 i_{1,2}, 2}$ | $W^{(1)}_{s_1 i_{1,1}+2, s_2 i_{1,2}, 3}$ |
| $i'_2$ | 12 | 13 | 14 | 15 |
| Precoder | $W^{(1)}_{s_1 i_{1,1}+3, s_2 i_{1,2}, 0}$ | $W^{(1)}_{s_1 i_{1,1}+3, s_2 i_{1,2}, 1}$ | $W^{(1)}_{s_1 i_{1,1}+3, s_2 i_{1,2}, 2}$ | $W^{(1)}_{s_1 i_{1,1}+3, s_2 i_{1,2}, 3}$ |
| $i'_2$ | 16-31 | | | |
| Precoder | Entries 16-31 constructed with replacing the second subscript $s_2 i_{1,2}$ with $s_2 i_{1,2}+1$ in entries 0-15 | | | |

| Config | | Selected i'$_2$ indices | (s$_1$,s$_2$) |
|---|---|---|---|
| | Config 1 | 0-3 | (1,1) |
| | Config 2 | 0-7, 16-23 | (2,2) |
| | Config 3 | 0-3,8-11,20-23,28-31 | (2,2) |
| | Config 4 | 0-15 | (2,2) |

| Oversampling factors o$_d$ | $W^{(1)}_{m_1, m_2, n} = \dfrac{1}{\sqrt{Q}} \begin{bmatrix} v_{m_1} \otimes u_{m_2} \\ \varphi_n v_{m_1} \otimes u_{m_2} \end{bmatrix}$ |
|---|---|
| Beam group spacing : s$_d$ | $v_{m_1} = \begin{bmatrix} 1 & e^{j\frac{2\pi m_1}{o_1 N_1}} & \cdots & e^{j\frac{2\pi m_1 (N_1-1)}{o_1 N_1}} \end{bmatrix}^t$ |
| First PMI : i$_{1,d}$ | $u_{m_2} = \begin{bmatrix} 1 & e^{j\frac{2\pi m_2}{o_2 N_2}} & \cdots & e^{j\frac{2\pi m_2 (N_2-1)}{o_2 N_2}} \end{bmatrix}^t$ |

In Table 12 above, configuration parameters necessary for PMI reporting, N1, N2, O1, O2 config, may adopt those set forth in Tables 5 to 11, i.e., codebookConfigN1-r13, codebookConfigN2-r13, codebookOverSamplingRate-Config-O1-r13, codebookOverSamplingRateConfig-O2-r13, and codebookSubsetSelectionConfig-r13. The following embodiments of the present invention propose schemes for supporting periodic channel state reporting based on a plurality of CSI-RS ports and codebooks. N1 and N2 mean the numbers of antennas per dimension, and O1 and O2 mean oversampling factors per dimension.

<First embodiment>

In order to support periodic channel state information reporting based on the 2D codebook, existing subband channel state reporting may expand to wideband and subband reporting.

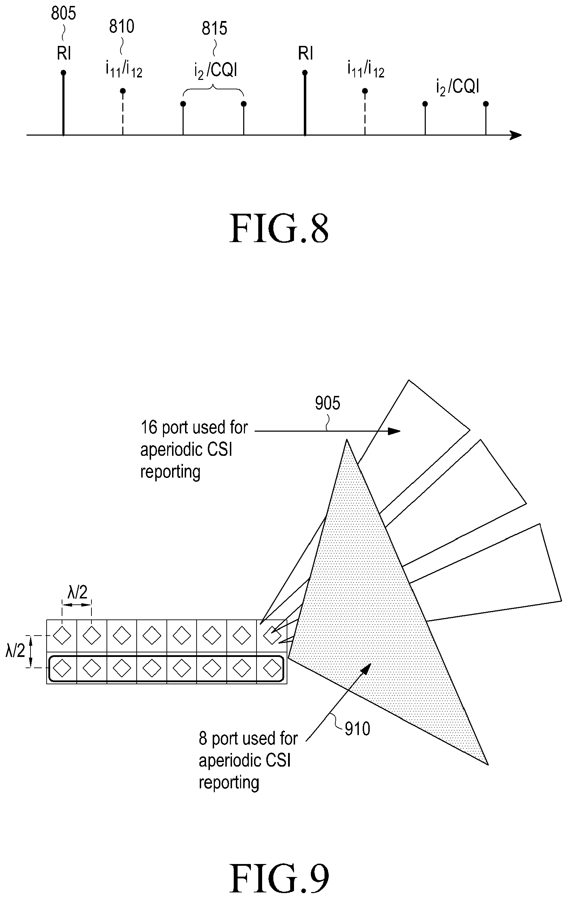

Fig. 8 is a view illustrating a method for channel state information reporting in a wireless communication system using multiple antennas according to the first embodiment of the present invention, where the feedback timings of the RI 805, $i_{11}/i_{12}$ 810, and $i_2$/CQI 815 are shown.

An analysis of the PMI bits of the 2D codebook reveals that, for the second PMI, i.e., $i_2(W_2)$, reporting, the existing channel state reporting method is available with 4 bits or less. However, in the case of $i_{11}/i_{12}$ 810 related to some bits of the first PMI bit payload ($W_1$ bit payload), the PMI bits increase, as follows, for the configuration parameters, N1, N2, O1, O2, and Config, supported for PMI reporting as shown in Tables 14 and 16. Tables 14 and 16 represent examples of PMI overhead of the 2D codebook.

[Table 14]

| (N1, N2) | (O1, O2) combinations |
|---|---|
| (8, 1) | (4, -), (8, -) |
| (2, 2) | (4, 4), (8, 8) |
| (2, 3) | {(8, 4), (8, 8)} |
| (3, 2) | {(8, 4), (4, 4)} |
| (2, 4) | {(8, 4), (8, 8)} |
| (4, 2) | {(8, 4), (4, 4)} |

[Table 15]

| Config = 1 | | | | |
|---|---|---|---|---|
| (N1, N2) | (O1, O2) | $W_{11}/W_{12}$ bits | (O1, O2) | $W_{11}/W_{12}$ bits |
| (8, 1) | (4, -) | 5 bits | (8, -) | 6 bits |
| (2,2) | (4, 4) | 3 bits/ 3 bits | (8, 8) | 4 bits/4 bits |
| (2, 3) | (8, 4) | 4 bits/4 bits | (8, 8) | 4 bits/5 bits |
| (3, 2) | (8, 4) | 5 bits/3 bits | (4, 4) | 4 bits/3 bits |
| (2, 4) | (8, 4) | 4 bits/4 bits | (8, 8) | 4 bits/5 bits |
| (4, 2) | (8, 4) | 5 bits/3 bits | (4, 4) | 4 bits/3 bits |

[Table 16]

| Config = 2, 3, 4 | | | | |
|---|---|---|---|---|
| (N1, N2) | (O1, O2) | $W_{11}/W_{12}$ bits | (O1, O2) | $W_{11}/W_{12}$ bits |
| (8, 1) | (4, -) | 4 bits | (8, -) | 5 bits |
| (2, 2) | (4, 4) | 2 bits/2 bits | (8, 8) | 3 bits/3 bits |
| (2, 3) | (8,4) | 3 bits/3 bits | (8, 8) | 3 bits/4 bits |
| (3, 2) | (8, 4) | 4 bits/2 bits | (4, 4) | 3 bits/2 bits |
| (2, 4) | (8, 4) | 3 bits/3 bits | (8, 8) | 3 bits/4 bits |
| (4, 2) | (8, 4) | 4 bits/2 bits | (4, 4) | 3 bits/2 bits |

In the case of PUCCH format 2 which is used for existing periodic channel state information reporting, 11 bits may be transmitted in the normal CP context. Further, in the case of the bits for transmission of $W_{11}/W_{12}$ which is the PMI related to some bits of the first PMI bit payload ($W_1$ bit payload), the sum of the two ($W_{11},W_{12}$) does not exceed 11 bits. Accordingly, according to an embodiment of the present invention, the amount of payload data required for periodic channel state information reporting may be reduced by applying the existing CSI reporting instance used in the subband described in connection with Figs. 5 and 6 (i.e., the RRC information used in the subband) to the wideband (i.e., by applying the same to the first PMI reporting as denoted with reference number 810 of Fig. 8). The reporting time at this time may be the same as that described above in connection with Figs. 5 and 6.

Applying this method of the present invention enables no or minimum application of the subsampling, which may deteriorate performance, thereby allowing for periodic channel state information reporting. Accordingly, as in the embodiment of Fig. 8, the overhead issue with the periodic channel state information reporting may be addressed by applying separate wideband PMI reporting periods for $i_{11}/i_{12}$ for $W_{11}/W_{12}$. Such embodiment of the present invention may likewise apply the subband CSI reporting structure mentioned in connection with Figs. 5 and 6 and may use the periodic configuration field shown in Table 17 as in the existing subband CSI reporting. Table 17 below represents examples of period configuration fields related to the PMI overhead of the 2D codebook.

[Table 17]

```
cqi-FormatIndicatorPeriodic-r10 CHOICE {
            widebandCQI-r10
    SEQUENCE {
                csi-ReportMode-r10 ENUMERATED
{submode1, submode2} OPTIONAL -- Need OR
            },
            subbandCQI-r10
    SEQUENCE {
                k
    INTEGER (1..4),
                periodicityFactor-r10
    ENUMERATED {n2, n4}
        }, }
```

In Table 17 above, k and periodicityFactor-r10 are fields for configuring the wideband PMI reporting period when PTI=1 or 0. periodicityFactor-r10 is intended for setting the wideband PMI(W1) reporting period when PTI=0 (wideband information reporting), and k is a field for determining the subband reporting period on the subband, after which the wideband information reporting is to be carried out.

The following are methods for setting the channel state reporting time using the method of the first embodiment.

Reporting time setting method 1: sets in the same manner as existing ones used on the subband.

Reporting time setting method 2: is a brand-new method.

Reporting time setting method 1 uses the same scheme as existing ones used on the subband. In this case, RI reporting may be represented as in Equation 2.

[Equation 2]

$$\left(10 \times n_f + \lfloor n_s/2 \rfloor - N_{OFFSET,CQI} - N_{OFFSET,RI}\right) \bmod\left(H \cdot N_{pd} \cdot M_{RI}\right) = 0, \quad H = J \cdot K + 1$$

In Equation 2, $J$ is the number of banwidth parts, and K is the same as k mentioned above and this is a value to allow the RI to be reported every k times the subband reporting period. $n_f$ is the subframe number, and $n_s$ is the slot number. Such RI reporting time is set same on the wideband and subband, and a difference from the existing reporting scheme is that k and the bandwidth part value as per the downlink bandwidth may also be used for wideband reporting. In this case, the reporting time for the wideband first PMI may also be represented as in Equation 3 in the same way as the existing one used on the subband.

[Equation 3]

$$\left(10 \times n_f + \lfloor n_s / 2 \rfloor - N_{OFFSET,CQI}\right) \bmod\left(H' \cdot N_{pd}\right) = 0, \; H' = \text{periodicityFactor}$$

The wideband second PMI/wideband CQI reporting may be represented as in Equation 4.

[Equation 4]

$$\left(10 \times n_f + \lfloor n_s / 2 \rfloor - N_{OFFSET,CQI}\right) \bmod N_{pd} = 0$$

Accordingly, where the fields mentioned in connection with Fig. 8 are used for wideband CSI reporting in reporting time setting method 1, periodicityFactor-r10 may be used, and where it is used for subband CSI reporting, k and periodicityFactor-r10 may be used. In the case of four transmit antennas (4Tx) and eight transmit antennas (8Tx), the UE may select wideband and subband reporting using the PTI. In the case of wideband reporting (PTI=0), the above equation may be used. Subband reporting (PTI=1 or not reported, in the case of 2Tx) may use the existing equation on the subband as follows. The RI reporting time is the same as that in the wideband reporting, and this and Equation 5 below may be used to report the wideband PMI and wideband CQI (or wideband second PMI and wideband CQI) in the subband reporting.

[Equation 5]

$$\left(10 \times n_f + \lfloor n_s / 2 \rfloor - N_{OFFSET,CQI}\right) \bmod\left(H \cdot N_{pd}\right) = 0$$

Further, the reporting time for the subband CQI and subband second PMI may be represented as in Equation 6 below.

[Equation 6]

$$\left(10 \times n_f + \lfloor n_s / 2 \rfloor - N_{OFFSET,CQI}\right) \bmod N_{pd} = 0$$

Reporting time setting method 2 may freely set reporting times unlike the existing method. Where wideband CSI reporting is supported using the first embodiment, the reporting time need not be associated with the number of bandwidth parts unlike in the existing scheme, ensuring more freedom. Accordingly, the reporting time may be defined by adopting new paramaters for wideband first PMI and RI reporting. For description purposes, the values may be assumed as $M_{RI}$ and $M_{i1}$. The parameters may be referred to with various denotations, such as $P_{RI}$, $P_{i1}$, $M_{W1}$, H, and K, and they, if supporting the same operations, may be the same despite different denotations. The parameters may be particular values pre-defined in the standards or may be set by RRC signaling. At this time, the following are methods for setting the RI reporting period.
RI reporting period setting method 1: sets as a multiple of the CQI period.
RI reporting period setting method 2: sets as a multiple of the wideband PMI period.
RI reporting period setting method 1 is a method of setting as a multiple of the CQI period. In this case, the wideband PMI period is irrelevant to the RI period. In this case, the corresponding reporting time may be represented as in Equation 7.

[Equation 7]

$$\left(10 \times n_f + \lfloor n_s / 2 \rfloor - N_{OFFSET,CQI} - N_{OFFSET,RI}\right) \bmod \left(N_{pd} \cdot M_{RI}\right) = 0$$

In Equation 7, $N_{pd}$ and $N_{OFFSET,CQI}$ mean the period and offset value in the subframes for CQI/PMI reporting, and $M_{RI}$ and $N_{OFFSET,RI}$ means the period and relative offset value in the subframes for RI reporting.

As above, the RI reporting period and the offset are set based on the CQI reporting period, thereby allowing the RI reporting time to be set.

RI reporting period setting method 2 is a method of setting as a multiple of the wideband PMI period. In this case, the corresponding reporting time may be represented as in Equation 8.

[Equation 8]

$$\left(10 \times n_f + \lfloor n_s / 2 \rfloor - N_{OFFSET,CQI} - N_{OFFSET,RI}\right) \bmod \left(M_{i1} \cdot N_{pd} \cdot M_{RI}\right) = 0$$

In this case, the period of the wideband PMI is set as a multiple of the CQI reporting period, and the RI reporting period is set as a multiple of the same. Accordingly, the RI reporting period and offset may be set and the RI reporting time may be set. At this time, the reporting time of the wideband PMI is shown in Equation 9.

[Equation 9]

$$\left(10 \times n_f + \lfloor n_s / 2 \rfloor - N_{OFFSET,CQI}\right) \bmod \left(M_{i1} \cdot N_{pd}\right) = 0$$

As set forth above, the reporting time of the wideband PMI is a multiple of the period, and the offset may not be considered. However, an additional offset may be considered in which case the offset should be reflected to the RI reporting time.

In the above method, since the subband channel state reporting already supports the corresponding structure, it may be proper to limit the above-described method to use only for the wideband channel state reporting. Accordingly, a method that may be considered is to set the same k and periodicityFactor as the existing ones for subband reporting while setting new parameters for wideband reporting. Further, the MRI may be the same parameter as the MRI supported in the existing standards.

To support the above-described first embodiment, subband CSI reporting requires additional information to report the subband position, and thus, additional subsampling may be considered for reporting for W2. For such subsampling, new different subsampling may be designed and applied per Config or the existing method may be reused. Further, subsampling may be reused only for partial channel state reporting corresponding to some Configs, e.g., Configs. 2, 3, and 4. This is why Config1 has a relatively small i2 size and is less necessary to apply subsampling to. Accordingly, in the instant embodiment, the existing codebook subsampling may be reused, and to that end, examples of table information are shown in Tables 18 and 19.

Table 18 represents an example of codebook subsampling for eight transmit antennas, and Table 19 represents an example of codebook subsampling for four transmit antennas.

[Table 18]

| RI | Relationship between the second PMI value and codebook index $i_2$ | |
|---|---|---|
| | Value of the second PMI $I_{PMI2}$ | Codebook index $i_2$ |
| 1 | 0-15 | $I_{PMI2}$ |
| 2 | 0-3 | $2I_{PMI2}$ |

(continued)

| RI | Relationship between the second PMI value and codebook index $i_2$ | |
| --- | --- | --- |
| | Value of the second PMI $I_{PMI2}$ | Codebook index $i_2$ |
| 3 | 0-3 | $8 \cdot \lfloor I_{PMI2}/2 \rfloor + (I_{PMI2} \bmod 2) + 2$ |
| 4 | 0-3 | $2I_{PMI2}$ |
| 5 | 0 | 0 |
| 6 | 0 | 0 |
| 7 | 0 | 0 |
| 8 | 0 | 0 |

[Table 19]

| RI | Relationship between the second PMI value and codebook index $i_2$ | |
| --- | --- | --- |
| | Value of the second PMI $I_{PMI2}$ | Codebook index $i_2$ |
| 1 | 0-15 | $I_{PMI2}$ |
| 2 | 0-3 | $I_{PMI2} + 2 \cdot \lfloor I_{PMI2}/2 \rfloor$ |
| 3 | 0-3 | $2I_{PMI2} + 4 \cdot \lfloor I_{PMI2}/2 \rfloor$ |
| 4 | 0-3 | $2I_{PMI2} + 4 \cdot \lfloor I_{PMI2}/2 \rfloor$ |

<Second embodiment>

The second embodiment is directed to a method for supporting periodic channel state reporting using one of CSI-RS resources suported for the NP CSI-RS. As set forth in Tables 5 to 11, the NP CSI-RS may support 12, 16, or more CSI-RS ports using the positions for the existing CSI-RSs in one subframe. The corresponding field is represented as nzp-resourceConfigList-r13 which may be used to set the position for the CSI-RS. Such supporting method is a method for bunding up a plurality of CSI-RS ports to support 12, 16, or more similar CSI-RSs. At this time, such a method is also available as to support the periodic channel state reporting only on a particular CSI-RS resource by designating the CSI-RS resource so as to reduce the overhead of the periodic channel state reporting.

Fig. 9 is a view illustrating a method for channel state information reporting in a wireless communication system using multiple antennas according to a second embodiment of the present invention, showing an example of channel state report transmission based on, e.g., 16 port CSI-RSs or 8 port CSI-RSs as denoted with reference numbers 905 and 910.

For aperiodic channel state reporting, the UE measures the channel on all the CSI-RS ports to determine the RI/PMI/CQI and transmits them to the base station. At this time, although the use of the method proposed in the first embodiment is advantageously able to support more precoding to enhance performance, it may increase the reporting instances, resulting in additional consumption of resources and period. Accordingly, it may support more than eight CSI-RS ports by using the channel state reporting and codebook supported in the existing 2, 4, and 8 CSI-RS ports. At this time, since the wideband uses smaller reporting instances, more reporting may be done in the context where the UE is in higher mobility, and the uplink resources may be consumed less and may thus be used for other uplink transmissions. Further, for the resources used for periodic channel state reporting, the CSI-RSs may be transmitted only through the corresponding resources, and power consumption may thus be reduced. Further, the number of codebooks supported in the 2, 4, or 8 CSI-RS ports is relatively small, and thus the UE becomes less complicated. At this time, the following methods are used to designate the corresponding CSI-RS resource.

CSI-RS resource designating method 1: uses the first resource set for the RRC in periodic channel state reporting
CSI-RS resource designating method 2: puts an additional field in the RRC field to set what resource is to be used in periodic channel state reporting.

CSI-RS resource designating method 1 is a method for indirectly setting the CSI-RS resource to be used in periodic channel state reporting where the base station sets the CSI-RS resource using the RRC field set forth in Tables 5 to 11. In this case, no additional overhead is needed, and thus, the UE may be subject to less complexity in implementation.

CSI-RS resource designating method 2 is a method for allowing the base station to directly set on what CSI-RS resource is to be used for periodic channel state reporting. CSI-RS resource designating method 2 may present different optimal CSI-RS positions depending on contexts, advantageously allowing for flexible use depending on contexts.

Further, the above method may lose accuracy where less CSI-RS ports are set. For example, where two CSI-RS ports are set, only four codebooks are supported for rank 1. Accordingly, in such case, the performance may encounter a problem.

In the case of four ports, the LTE system supports two codebooks. One supports only 16 PMIs, the enhanced codebook supports up to 256, and the corresponding is used using 16 first (wideband) PMIs and second (subband) PMIs. Supporting more PMIs delivers a better performance. Thus, having more CSI-RS ports allows for use of an enhanced codebook when the 4-port codebook is based. Accordingly, using the 4-port codebook using the method proposed in the second embodiment may support a higher performance when always using the enhanced codebook. In this case, to support the corresponding operation, the UE may ensure the use of always using the enhanced 4Tx codebook wheren 4 port channel state reporting is performed for 12 or 16 port CSI-RS channel state reporting.

<Third embodiment>

The third embodiment is directed to a method of using the existing 4 or 8 Tx codebooks by combining the CSI-RS ports as set. As mentioned above, the 2Tx codebook may lose freedom or accuracy to support 12 or 16 CSI-RS ports or multiple similar CSI-RS ports. Accordingly, in such case, the performance may encounter a problem. However, supporting 12, 16, or more similar CSI-RS ports using the 2 port CSI-RSs enables the position of the CSI-RS port to be more flexibly set, advantageously allowing for various settings given the mobility and accuracy or the CSI-RS transmit power. Thus, such method, although able to secure enough flexibility and power, is always based on the 2Tx codebook in periodic channel state reporting even in the case of 12 or 16 CSI-RS ports. Therefore, in such case, it is also possible to combine and use the resources. Various methods as follow may be used in such combining.

Combining method 1: combines and uses with respect to the CSI-RS port index
Combining method 2: includes and uses until the number for reporting is met, starting with the first one
Combining method 3: sets the corresponding resource using the RRC field.

Combining method 1 above is a method for combining with respect to the CSI-RS port index. In the LTE standards, the CSI-RS ports may be indexed with port indexes 15, 16,..., 30. At this time, upon reporting the periodic channel state information using the 8Tx codebooks, the CSI-RS ports corresponding to 15, ..., 22 may be used for periodic channel state reporting.

Combining method 2 above is a method for combining and using with respect to the resource index. As mentioned above, the CSI-RS position resource indexes are set to the fields 0, 1, ..., 7, respectively. Accordingly, where 8 Tx codebooks are supported for the 2 port CSI-RS ports, four 2 CSI-RS ports should be supported. Accordingly, periodic channel state reporting is supported using the corresponding number 0, 1, 2, and 3 resources. To determine the index of the resource, such a method may also be available to use 0, 1, 2, ... for nzp-resourceConfigList-r13 depending on preset order.

Combining method 3 is a method of setting the corresponding resource using the RRC field. At this time, the bitmap may also be one method. For example, where 16 CSI-RS ports are supported using two CSI-RS ports, eight CSI-RS resources are needed. Accordingly, a method available in this case is to use eight bitmaps. For example, assuming that 11001100 is set, a bundle into eight ports may be made using the numbers 0, 1, 4, and 5 CSI-RS resources, thereby able to report the channel state information.

As mentioned above in the above combining method, a need exists for a method for setting the number of CSI-RS ports corresponding to the codebooks. The following methods may be available as the above methods.

Port count setting method 1: directly sets in the RRC field

Port count setting method 2: sets with respect to the maximum number of CSI-RS ports supported in the corresponding CSI-RS ports

Port count setting method 3: sets using the number defined in the standards.

Port count setting method 1 is a method of directly setting in the RRC field. The use of this method renders it possible to directly set in the RRC field how many CSI-RS ports are to be set in the periodic channel state reporting. For example, a field, such as CSI-RS ports Periodic, may be left in the RRC field, and a number may be set in the corresponding field. The number set at this time may be 2, 4, or 8.

Port count setting method 2 is a method of setting depending on the maximum number of CSI-RS ports supported in the corresponding CSI-RS ports. For example, 16 ports may be set using eight 2 CSI-RS ports or two 8 CSI-RS ports.

In such case, since the maximum number of individual CSI-RS resources settable is 8, although 2 CSI-RS ports are used, reporting should be made always using 8. Taking 12 ports as an example, they may be set using three 4 CSI-RS ports and six 2 CSI-RS ports. In this case, thus, even though it is for 2 CSI-RS ports, reporting may be rendered to be done based on 4 CSI-RS ports.

Further, in the third embodiment, like the second embodiment, the method of always applying the 4 CSI-RS ports may likewise apply to ensure the periodic channel state reporting performance.

<Fourth embodiment>

The first to third embodiments have their own merits and demerits. Accordingly, it is also possible to support the corresponding periodic channel state reports as submodes. An example method is to support the second or third embodiment in the case of submode 1 and the first embodiment in the case of submode2. Such method enables a selection as to whether to allow the base station to use the channel state report while supporting more accurate precoding or to use a shorter period and lower power while supporting less acurate precoding.

<Fifth embodiment>

The second embodiment and the third embodiment may be selectively applied depending on contexts. For example, it may be varied depending on whether the RE position of the CSI-RS to support multiple CSI-RS ports is eight ports or two ports. Where 16 ports are supported using two 8 port CSI-RSs and eight 2 port CSI-RSs, since one 8 port CSI-RS is enough to support eight ports, periodic channel state information may be generated using the same. Accordingly, in this case, the periodic channel state report may be generated using the second embodiment. However, in the case of supporting using eight 2 port CSI-RSs, the accuracy of the channel state information or the quantization level may be insufficient. Accordingly, in this case, aggregation may be performed with respect to the port index or resource index using the third embodiment so that the periodic channel state is reported using the 8Tx codebooks, addressing such problem. 12 ports may also be set using three 4 port CSI-RSs and six 2 port CSI-RSs in which case aggregation may be performed with respect to the port index or resource index among the six 2 port CSI-RSs, and the periodic channel state is reported using the 4Tx codebooks, addressing such problem.

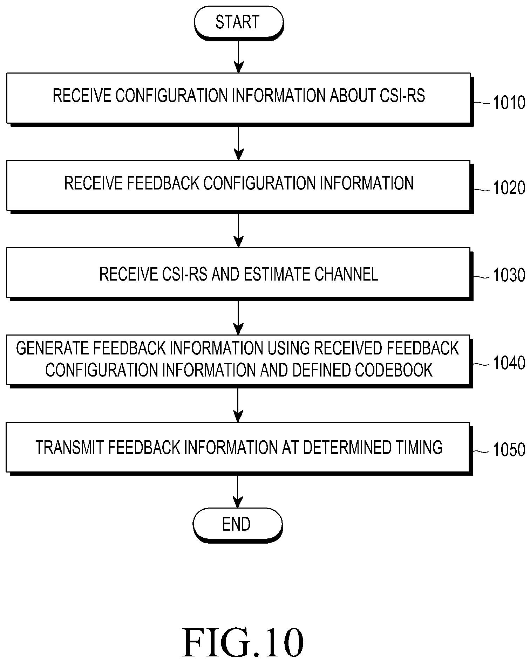

Fig. 10 is a flowchart illustrating operations of a UE according to an embodiment of the present invention.

Referring to Fig. 10, the UE receives configuration information about the CSI-RS configuration in step 1010. Further, the UE may identify, based on the received configuration information, at least one of the number of ports for each NP CSI-RS, N1 and N2, which are the numbers of antennas per dimension, O1 and O2, which are oversampling factors per dimension, a plurality of resource configs for settingone subframe config and position for transmitting multiple CSI-RSs, codebook subset restriction-related information, CSI reporting-related information, CSI-process index, and transmit power information. Thereafter, the UE configures one feedback configuration information based on at least one 2, 4, or 8 port CSI-RS position. In the feedback configuration information, the PMI/CQI period and offset, RI period and offset, whether wideband/subband, and submode may be set. In step 1030, upon receiving multiple CSI-RSs in one subframe based on the feedback configuration information, the UE estimates the channel between the base station antenna and the UE's receive antenna based on the CSI-RSs. In step 1040, the UE generates at least one of the rank, PMI, and CQI as feedback information using the received feedback configuration information based on a virtual channel added between the estimated channel and the CSI-RS. At this time, at least one of the methods proposed according to the above-described embodiments of the present invention may be used to generate the corresponding feedback information. That is, more than one of the plurality of embodiments of the present invention may be considered together, and which may be achieved by the submode setting. Thereafter, the UE may transmit the feedback information to the base station at a feedback timing determined as per the feedback configuration of the base station in step 1050 and complete the process of generating and reporting the channel feedback considering the two-dimensional arrangement. At least one of the methods suggested as per the embodiments of the present invention may be applied to the feedback timing at this time.

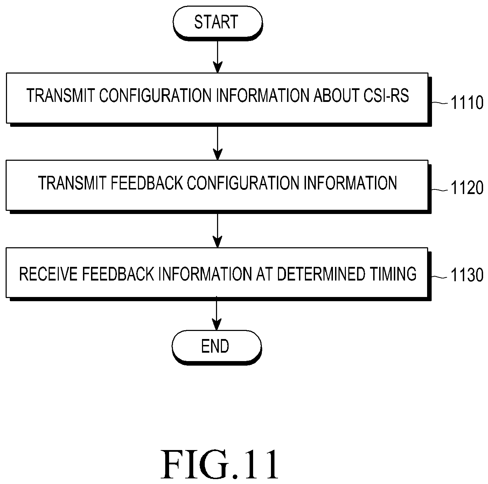

Fig. 11 is a flowchart illustrating operations of a base station according to an embodiment of the present invention.

Referring to Fig. 11, the base station transmits, to the UE, configuration information for the CSI-RS to measure the channel state on the UE in step 1110. The configuration information about the CSI-RS may include at least one of the number of ports for each NP CSI-RS, N1 and N2, which are the numbers of antennas per dimension, O1 and O2, which are oversampling factors per dimension, a plurality of resource configs for settingone subframe config and position for transmitting multiple CSI-RSs, codebook subset restriction-related information, CSI reporting-related information, CSI-process index, and transmit power information. Thereafter, the base station transmits to the UE feedback configuration information based on at least one CSI-RS in step 1120. In the feedback configuration information, at least one of the PMI/CQI period and offset, RI period and offset, whether wideband/subband, and submode may be set. Thereafter, the base station transmits the CSI-RS configured as per the configuration information about the CSI-RS to the UE. Then, the UE estimates the channel state per antenna port, estimates an additional channel state for the virtual resource based on the estimated channel state, and generates feedback information for channel state reporting. At this time, one of the embodiments proposed herein may be used to generate the corresponding feedback information, and multiple ones of the embodiments of the present invention may together be considered which may be achieved by the submode setting. The UE generates feedback information including at least one of the PMI, RI, and CQI as above and transmits the feedback information to the base station. Accordingly, the base station receives the feedback information from the UE at a predetermined feedback timing and uses the same to determine the channel state between the UE and the base station in step 1130.

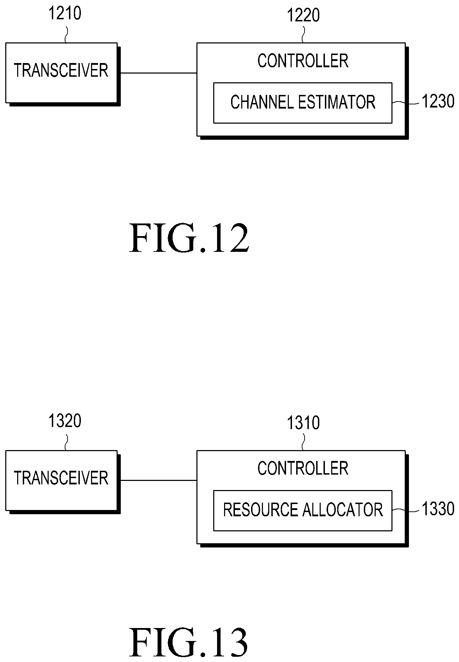

Fig. 12 is a block diagram illustrating a configuration of a UE according to an embodiment of the present invention.

Referring to Fig. 12, the UE includes a transceiver 1210 and a controller 1220. The transceiver 1210 performs the function of transmitting or receiving data to/from another network entity (e.g., a base station). Here, the transceiver 1210 may generate the feedback information under the control of the controller 1220 and transmit the feedback information to the base station. The controller 1220 controls the state and operation of all the components of the UE to generate and transmit feedback information as per at least one of the embodiments of the present invention set forth above. Specifically, the controller 1220 generates feedback information according to the information allocated by the base station. Further, the controller 1220 controls the transceiver 1210 to feedback the generated channel information to the base station according to the timing information allocated by the base station. To that end, the controller 1220 may include a channel estimator 1230. The channel estimator 1230 determines necessary feedback information through the feedback configuration information and the CSI-RS received from the base station and estimates the channel state based on the received CSI-RS based on the feedback information. Although in Fig. 12 the UE includes the transceiver 1210 and the controller 1220, the UE may further include various components depending on functions performed thereon without limited thereto. For example, the UE may further include a displaying unit displaying the current state of the UE, an input unit receiving signals such as performing functions from the user, and a storage unit storing data generated in the UE. Further, although the channel estimator 1230 is shown to be included in the controller 1220, it is not necessarily limited thereto. The controller 1220 may control the transceiver 1210 to receive configuration information for each of at least one or more reference signal resources from the base station. Further, the controller 1220 may control the transceiver 1210 to measure the at least one or more reference signals and receive from the base station feedback configuration information to generate feedback information as per the measurement result.

Further, the controller 1220 may measure at least one or more reference signals received via the transceiver 1210 and generate feedback information according to the feedback configuration information. The controller 1220 may control the transceiver 1210 to transmit the generated feedback information to the base station at a feedback timing as per the feedback configuration information. Further, the controller 1220 may receive a channel status indication-reference signal (CSI-RS) from the base station, generate feedback information based on the received CSI-RS, and transmit the generated feedback information to the base station. In this case, the controller 1220 may select each precoding matrix per antenna port group of the base station and further select an additional precoding matrix based on the relationship between the antenna port groups of the base station.

Further, the controller 1220 may receive a CSI-RS from the base station, generate feedback information based on the received CSI-RS, and transmit the generated feedback information to the base station. In this case, the controller 1220 may select one precoding matrix for all the antenna port groups of the base station. Further, the controller 1220 may receive feedback configuration information from the base station, receive a CSI-RS from the base station, generate feedback information based on the received feedback configuration information and CSI-RS, and transmit the generated feedback information to the base station. In this case, the controller 1220 may receive additional feedback configuration information based on the relationship between the antenna port groups and the feedback configuration information corresponding to each antenna port group of the base station.

Fig. 13 is a block diagram illustrating a configuration of a base station according to an embodiment of the present invention.

Referring to Fig. 13, the base station includes a controller 1310 and a transceiver 1320. The controller 1310 controls the state and operation of all the components of the base station to provide configuration information about the CSI-RS and feedback configuration information to the UE and receive feedback information from the UE at a corresponding feedback timing so that the UE may generate and transmit feedback information as per at least one of the above-described embodiments of the present invention. Specifically, the controller 1310 allocates CSI-RS resources to the UE for the channel estimation of the UE and allocates feedback resources and feedback timing to the UE. For this, the controller 1310 may further include a resource allocator 1330. Further, the base station allocates feedback configurations and feedback timings so that feedback transmissions from several UEs do not collide with each other and receives and interprets the feedback information configured at the corresponding timing. The transceiver 1320 performs the function of communication data, reference signals, and feedback information with the UE. Here, the transceiver 1320 transmits the CSI-RS to the UE through the allocated resource under the control of the controller 1310 and receives feedback information about the channel state from the UE.

Further, although the resource allocator 1330 is shown to be included in the controller 1310, it is not necessarily limited thereto. The controller 1310 may control the transceiver 1320 to transmit the configuration information for each of at least one or more reference signals to the UE or generate at least one or more reference signals. Further, the controller 1310 may control the transceiver 1320 to transmit to the UE feedback configuration information to generate feedback information as per the measurement result. Further, the controller 1310 may control the transceiver 1320 to transmit the at least one or more reference signals to the UE and receive the feedback information transmitted from the UE at a feedback timing according to the feedback configuration information. Further, the controller 1310 may transmit the feedback configuration information to the UE, transmit the CSI-RS to the UE, and receive from the UE feedback information generated based on the feedback configuration information and the CSI-RS. In this case, the controller 1310 may transmit additional feedback configuration information based on the relationship between the antenna port groups and the feedback configuration information corresponding to each antenna port group of the base station. Further, the controller 1310 may transmit to the UE the beamformed CSI-RS based on the feedback information and receive from the UE the feedback information generated based on the CSI-RS. According to the above-described embodiments of the present invention, it may be possible to prevent allocation of excessive feedback resources in transmitting CSI-RSs from the base station using a number of two-dimensional antenna array transmit antennas and the increase in channel estimation complexity of the UE. The UE may effectively measure the channel of all of the many transmit antennas, configure the same in feedback information, and notify the same to the base station.

**Claims**

1. A method for transmitting channel state information by a user equipment (UE) in a wireless communication system using multiple antennas, the method comprising:

   receiving first configuration information about at least one reference signal from a base station;
   receiving second configuration information for generating periodic channel state information as per measuring the at least one reference signal;
   receiving and measuring the at least one reference signal from the base station, based on the first configuration information; and
   generating the periodic channel state information including a first precoding matrix indicator (PMI) for a wideband based on the second configuration information including configuration information for channel state reporting on a subband and transmitting the periodic channel state information to the base station.

2. The method of claim 1, wherein the information for the channel state reporting on the subband uses radio resource control (RRC) information, and wherein the first PMI for the wideband is transmitted by applying the RRC information used on the subband.

3. The method of claim 1, wherein a reporting time of the first PMI is set based on a period and an offset in subframes for channel quality indicator (CQI)/PMI reporting.

4. The method of claim 1, wherein the channel state information further includes a rank indicator (RI), and wherein a reporting time of the RI is set based on a period and an offset in subframes for CQI/PMI reporting and a period and a relative offset in subframes for RI reporting.

5. The method of claim 1, wherein the first PMI is a PMI related to some bits of a PMI bit payload.

6. The method of claim 1, wherein subsampling for the channel state reporting on the subband uses codebook subsampling applied to a predetermined number of transmit antennas.

7. A UE in a wireless communication system using multiple antennas, the UE comprising:

   a transceiver configured to transmit and receive data; and
   a controller configured to perform controller to receive first configuration information about at least one reference signal from a base station, receive second configuration information for generating periodic channel state information as per a result of measuring the at least one reference signal, receive and measure the at least one reference signal from the base station, based on the first configuration information, and generate the periodic channel state information including a first precoding matrix indicator (PMI) for a wideband based on the second configuration information including configuration information for channel state reporting on a subband and transmitting the periodic channel state information to the base station.

8. The UE of claim 7, wherein the information for the channel state reporting on the subband uses radio resource control (RRC) information, and wherein the first PMI for the wideband is transmitted by applying the RRC information used on the subband.

9. The UE of claim 7, wherein the controller is configured to set a reporting time of the first PMI based on a period and an offset in subframes for channel quality indicator (CQI)/PMI reporting.

10. The UE of claim 7, wherein the channel state information further includes a rank indicator (RI), and wherein the controller is configured to set a reporting time of the RI based on a period and an offset in subframes for CQI/PMI reporting and a period and a relative offset in subframes for RI reporting.

11. The UE of claim 7, wherein the first PMI is a PMI related to some bits of a PMI bit payload.

12. The UE of claim 7, wherein subsampling for the channel state reporting on the subband uses codebook subsampling applied to a predetermined number of transmit antennas.

13. A method for receiving feedback information by a base station in a wireless communication system using multiple antennas, the method comprising:

transmitting first configuration information about at least one reference signal;
transmitting second configuration information for receiving from a UE, as the feedback information, periodic channel state information as per a result of measuring the at least one reference signal; and
receiving the channel state information including a first PMI for a wideband from the UE based on the first configuration information and the second configuration information, wherein the first PMI for the wideband is received from the UE based on the second configuration information including configuration information for channel state reporting on a subband.

14. A base station in a wireless communication system using multiple antennas, the base station comprising:

a transceiver configured to transmit and receive data; and
a controller configured to perform control to transmit first configuration information about at least one reference signal, transmit second configuration information for receiving from a UE, as feedback information, periodic channel state information as per a result of measuring the at least one reference signal, and receive the channel state information including a first PMI for a wideband from the UE based on the first configuration information and the second configuration information, wherein the first PMI for the wideband is received from the UE based on the second configuration information including configuration information for channel state reporting on a subband.

15. The method of claim 13 or the base station of claim 14, wherein the information for the channel state reporting on the subband uses radio resource control (RRC) information, and wherein the first PMI for the wideband is transmitted by applying the RRC information used on the subband.

FIG.1

205

1subframe = 14 OFDM symbols = 1 msec

200

210

1RB = 12 subcarriers = 180 kHz

225

| | | | | | | | C | | |
| | | | | | | D | | |
| | | A | | | E | | I |
| | | B | | | F | | J |
| | | | | | G | | |
| | | | | | H | | |
| | | | | | C | | |
| | | | | | D | | |
| | | A | | | E | | I |
| | | B | | | F | | J |
| | | | | | G | | |
| | | | | | H | | |

| CRS | ~230 |
| DMRS | ~235 |
| PDSCH | ~240 |
| Control Channels | ~245 |
| CSI-RS/Muting | ~250 |

Control
Region
215

Data Region
220

FIG.2

FIG.3

FIG.4

FIG.5

FIG.6

FIG.7

FIG.8

FIG.9

EP 3 367 587 A1

START

RECEIVE CONFIGURATION INFORMATION ABOUT CSI-RS — 1010

RECEIVE FEEDBACK CONFIGURATION INFORMATION — 1020

RECEIVE CSI-RS AND ESTIMATE CHANNEL — 1030

GENERATE FEEDBACK INFORMATION USING RECEIVED FEEDBACK CONFIGURATION INFORMATION AND DEFINED CODEBOOK — 1040

TRANSMIT FEEDBACK INFORMATION AT DETERMINED TIMING — 1050

END

FIG.10

START

TRANSMIT CONFIGURATION INFORMATION ABOUT CSI-RS — 1110

TRANSMIT FEEDBACK CONFIGURATION INFORMATION — 1120

RECEIVE FEEDBACK INFORMATION AT DETERMINED TIMING — 1130

END

FIG.11

1210

1220

| TRANSCEIVER |

| CONTROLLER |
| CHANNEL ESTIMATOR |—— 1230

# FIG.12

1320

1310

| TRANSCEIVER |

| CONTROLLER |
| RESOURCE ALLOCATOR |—— 1330

# FIG.13

## INTERNATIONAL SEARCH REPORT

| | International application No. |
|---|---|
| | **PCT/KR2016/013374** |

<table>
<tr><td colspan="2">A.    CLASSIFICATION OF SUBJECT MATTER</td></tr>
<tr><td colspan="2"><i>H04B 7/06(2006.01)i</i></td></tr>
<tr><td colspan="2">According to International Patent Classification (IPC) or to both national classification and IPC</td></tr>
</table>

**B.    FIELDS SEARCHED**

Minimum documentation searched (classification system followed by classification symbols)
H04B 7/06; H04L 5/00; H04W 24/10; H04B 7/04

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: first configuration information, reference signal, periodic channel state information, second configuration information, measurement, wide band, first PMI, RRC, report point, RI, PMI bit payload, codebook sub-sampling

**C.    DOCUMENTS CONSIDERED TO BE RELEVANT**

| Category* | Citation of document, with indication, where appropriate, of the relevant passages | Relevant to claim No. |
|---|---|---|
| Y | US 2015-0162966 A1 (LG ELECTRONICS INC.) 11 June 2015<br>See paragraphs [0100]-[0165]; claim 1; and figure 9. | 1-15 |
| Y | SAMSUNG, "Evaluation Results on Subband CSI Reporting for FD-MIMIO",<br>R1-156795, 3GPP TSG RAN WG1 Meeting #83, Anaheim, USA, 06 November 2015<br>See sections 2-2.2. | 1-15 |
| Y | SAMSUNG, "Discussion on PUCCH Based Class A CSI Reporting for FD-MIMO",<br>R1-156793, 3GPP TSG RAN WG1 Meeting #83, Anaheim, USA, 06 November 2015<br>See section 2.2. | 5,11 |
| A | US 2015-0036644 A1 (SAMSUNG ELECTRONICS CO., LTD.) 05 February 2015<br>See paragraphs [0024]-[0067]; and figures 1-4. | 1-15 |
| A | US 2013-0230007 A1 (NAGATA, Satoshi et al.) 05 September 2013<br>See paragraphs [0036]-[0070]; and figures 3-10. | 1-15 |

☐   Further documents are listed in the continuation of Box C.     ☒   See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 16 FEBRUARY 2017 (16.02.2017) | **17 FEBRUARY 2017 (17.02.2017)** |

| Name and mailing address of the ISA/KR | Authorized officer |
|---|---|
| Korean Intellectual Property Office<br>Government Complex-Daejeon, 189 Seonsa-ro, Daejeon 302-701, Republic of Korea<br>Facsimile No. 82-42-472-7140 | Telephone No. |

Form PCT/ISA/210 (second sheet) (January 2015)

INTERNATIONAL SEARCH REPORT
Information on patent family members

| | | | International application No.<br>**PCT/KR2016/013374** |
|---|---|---|---|

| Patent document<br>cited in search report | Publication<br>date | Patent family<br>member | Publication<br>date |
|---|---|---|---|
| US 2015-0162966 A1 | 11/06/2015 | CN 104365136 A | 18/02/2015 |
| | | CN 104428998 A | 18/03/2015 |
| | | CN 104604283 A | 06/05/2015 |
| | | EP 2863679 A1 | 22/04/2015 |
| | | EP 2869478 A1 | 06/05/2015 |
| | | EP 2869478 A4 | 24/02/2016 |
| | | EP 2892275 A1 | 08/07/2015 |
| | | JP 06014264 B2 | 25/10/2016 |
| | | JP 2015-519855 A | 09/07/2015 |
| | | JP 2015-532813 A | 12/11/2015 |
| | | KR 10-1443650 B1 | 23/09/2014 |
| | | KR 10-2015-0035555 A | 06/04/2015 |
| | | KR 10-2015-0051998 A | 13/05/2015 |
| | | US 2015-0078271 A1 | 19/03/2015 |
| | | US 2015-0131568 A1 | 14/05/2015 |
| | | US 2016-0150509 A1 | 26/05/2016 |
| | | US 9271283 B2 | 23/02/2016 |
| | | WO 2013-187739 A1 | 19/12/2013 |
| | | WO 2014-007512 A1 | 09/01/2014 |
| | | WO 2014-035137 A1 | 06/03/2014 |
| US 2015-0036644 A1 | 05/02/2015 | US 2013-0083758 A1 | 04/04/2013 |
| | | US 8891472 B2 | 18/11/2014 |
| | | US 9281927 B2 | 08/03/2016 |
| US 2013-0230007 A1 | 05/09/2013 | CN 103238286 A | 07/08/2013 |
| | | CN 103238286 B | 23/03/2016 |
| | | EP 2627023 A1 | 14/08/2013 |
| | | JP 04938122 B2 | 23/05/2012 |
| | | JP 2012-080396 A | 19/04/2012 |
| | | KR 10-2013-0120467 A | 04/11/2013 |
| | | MX 2013003668 A | 02/07/2013 |
| | | TW 201225558 A | 16/06/2012 |
| | | TW I465061 B | 11/12/2014 |
| | | US 9136922 B2 | 15/09/2015 |
| | | WO 2012-046689 A1 | 12/04/2012 |

Form PCT/ISA/210 (patent family annex) (January 2015)